# EUROPEAN PATENT APPLICATION

(11) **EP 4 611 272 A1**
(43) Date of publication of application: **03.09.2025**
(21) Application number: 23883152.3
(22) Date of filing: 26.10.2023
(51) Int. Cl.: H04B 7/0408, H04B 7/06, H04W 72/23, H04B 17/318, H04L 5/00, G06N 20/00

(54) **METHOD AND DEVICE FOR MANAGING MODEL IN BEAM MANAGEMENT USING ARTIFICIAL INTELLIGENCE AND MACHINE LEARNING**

(30) Priority: 26.10.2022 KR 20220139081; 25.10.2023 KR 20230144192
(71) Applicant: KT Corporation, Seongnam-si, Gyeonggi-do 13606 (KR)
(72) Inventor: LEE, Eun Jong, Seongnam-si, Gyeonggi-do 13606 (KR)
(74) Representative: Brevalex
(86) International application number: PCT/KR2023/016809
(87) International publication number: WO 2024/091047

(57) **Abstract**

Provided are a method and device for managing a model in beam management using artificial intelligence and machine learning. The method may include: receiving configuration information about one or more reference signal (RS) resource sets configured to respectively correspond to one or more AI/ML models or functionalities used for a certain purpose; receiving instruction information about selected one RS resource set, which is selected from the one or more RS resource sets; and measuring signal intensity or signal quality of a reference signal based on the selected one RS resource set.

## Description

### Technical Field

The disclosure relates to a method and device for managing a model in beam management using artificial intelligence and machine learning in a next-generation radio access network (hereinafter, "new radio (NR)").

### Background Art

Recently, the 3rd generation partnership project (3GPP) has approved the "Study on New Radio Access Technology", which is a study item for research on next-generation/5G radio access technology(hereinafter, referred to as "new radio" or "NR"). On the basis of the Study on New Radio Access Technology, Radio Access Network Working Group 1 (RAN WG1) has been discussing frame structures, channel coding and modulation, waveforms, multiple access methods, and the like for the new radio (NR). It is required to design the NR not only to provide an improved data transmission rate as compared with the long term evolution (LTE)/LTE-Advanced, but also to meet various requirements in detailed and specific usage scenarios.

An enhanced mobile broadband (eMBB), massive machine-type communication (mMTC), and ultra reliable and low latency communication (URLLC) are proposed as representative usage scenarios of the NR. In order to meet the requirements of the individual scenarios, it is required to design the NR to have flexible frame structures, compared with the LTE/LTE-Advanced.

Because the requirements for data rates, latency, reliability, coverage, etc. are different from each other, there is a need for a method for efficiently multiplexing a radio resource unit based on different numerologies from other (e.g., subcarrier spacing, subframe, Transmission Time Interval (TTI), etc.) as a method for efficiently satisfying each usage scenario requirement through a frequency band constituting any NR system.

As part of the aspect, artificial intelligence and machine learning technologies are being introduced into the wireless communications field, thereby necessitating a specific architecture that supports effective management and deployment of the AI/ML model.

### Detailed Description of the Invention

### Technical Problem

The disclosure may provide a method and device for model management in beam management using artificial intelligence and machine learning in NR.

### Technical Solution

In an aspect, the disclosure may provide a method for a user equipment (UE) to perform model management in beam management using artificial intelligence and machine learning (AI/ML). The method may include receiving configuration information about one or more reference signal (RS) resource sets configured to correspond to one or more AI/ML models or functionalities, respectively, used for a predetermined purpose, receiving indication information about one reference signal resource set selected from among the one or more reference signal resource sets, and measuring a signal strength or signal quality for the reference signal based on the one reference signal resource set.

In another aspect, the disclosure may provide a method for a base station to perform model management in beam management using artificial intelligence and machine learning. The method may include transmitting, to a UE, configuration information about one or more reference signal (RS) resource sets configured to correspond to one or more AI/ML models or functionalities, respectively, used for a predetermined purpose, transmitting, to the UE, indication information about one reference signal resource set selected from among the one or more reference signal resource sets, and transmitting the reference signal to the UE based on the one reference signal resource set.

In another aspect, the disclosure may provide a user equipment (UE) performing model management in beam management using artificial intelligence and machine learning (AI/ML). The user equipment may include a transmitter, a receiver, and a controller controlling an operation of the transmitter and the receiver, wherein the controller receives configuration information about one or more reference signal (RS) resource sets configured to correspond to one or more AI/ML models or functionalities, respectively, used for a predetermined purpose, receives indication information about one reference signal resource set selected from among the one or more reference signal resource sets, and measures a signal strength or signal quality for the reference signal based on the one reference signal resource set.

In another aspect, the disclosure may provide a base station to perform model management in beam management using artificial intelligence and machine learning. The base station may include a transmitter, a receiver, and a controller controlling an operation of the transmitter and the receiver, wherein the controller transmits, to a UE, configuration information about one or more reference signal (RS) resource sets configured to correspond to one or more AI/ML models or functionalities, respectively, used for a predetermined purpose, transmits, to the UE, indication information about one reference signal resource set selected from among the one or more reference signal resource sets, and transmits the reference signal to the UE based on the one reference signal resource set.

### Advantageous Effects

According to the embodiments, models in beam management may be managed using artificial intelligence and machine learning in NR.

Further, according to the embodiments, it is possible to measure a new beam set faster and more efficiently by preconfiguring a reference signal resource mapped to related beam information in AI/ML model management. An appropriate reference signal resource may then be dynamically transmitted/received according to the switching of a model/state/scenario.

Further, according to the present embodiments, as the UE may be allowed to determine the necessity for measuring a new beam set, a model appropriate for the UE's context may be determined even without transmitting information about the UE to the base station. A beam set according thereto may be quickly indicated to the base station, so that beam measurement may be performed faster.

### Brief Description of Drawings

FIG. 1 is a view schematically illustrating an NR wireless communication system in accordance with embodiments of the present disclosure.
FIG. 2 is a view schematically illustrating a frame structure in an NR system in accordance with embodiments of the present disclosure.
FIG. 3 is a view for explaining resource grids supported by a radio access technology in accordance with embodiments of the present disclosure.
FIG. 4 is a view for explaining bandwidth parts supported by a radio access technology in accordance with embodiments of the present disclosure.
FIG. 5 is a view illustrating an example of a synchronization signal block in a radio access technology in accordance with embodiments of the present disclosure.
FIG. 6 is a signal diagram for explaining a random access procedure in a radio access technology in accordance with embodiments of the present disclosure.
FIG. 7 is a view for explaining CORESET.
FIG. 8 is a view illustrating an operation in which two UEs perform initial beam management at two different positions when a base station performs a beam transmission operation.
FIG. 9 is an example view illustrating an initial access procedure of a UE and a base station.
FIGS. 10 and 11 are views illustrating setting a candidate beam allocated to a UE.
FIG. 12 is a view illustrating a procedure for beam management.
FIG. 13 is a view illustrating a procedure in which a UE performs model management in beam management using artificial intelligence and machine learning according to an embodiment.
FIG. 14 is a view illustrating a procedure in which a base station performs model management in beam management using artificial intelligence and machine learning according to an embodiment.
FIGS. 15 and 16 are views illustrating an operation of performing beam measurement and beam prediction using AI/ML according to an embodiment.
FIGS. 17 and 18 are views illustrating an example of a MAC CE for indicating a reference signal resource set according to an embodiment.
FIG. 19 is a view illustrating operations of a UE and a base station when the UE selects one reference signal resource set according to an embodiment.
FIG. 20 is a view illustrating operations of a UE and a base station when the UE selects one or more reference signal resource sets according to an embodiment.
FIG. 21 is a view illustrating operations of a UE and a base station when the base station selects one reference signal resource set according to an embodiment.
FIG. 22 is a view illustrating a configuration of a UE according to another embodiment.
FIG. 23 is a view illustrating a configuration of a base station according to another embodiment.

### Mode for Carrying out the Invention

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

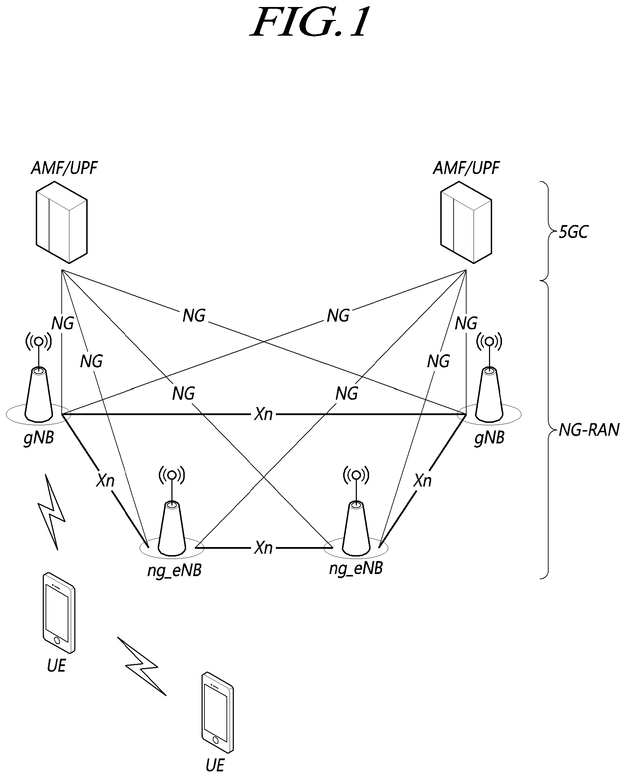

FIG. 1 is a view schematically illustrating an NR system to which the present embodiment is applicable.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

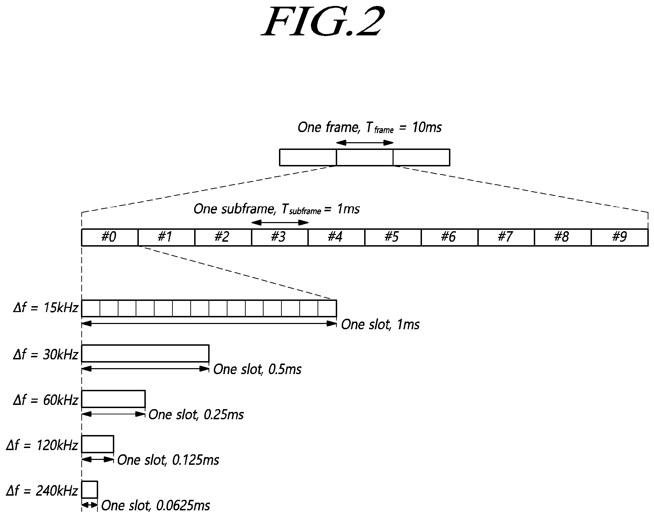

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system to which the present embodiment may be applied. Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

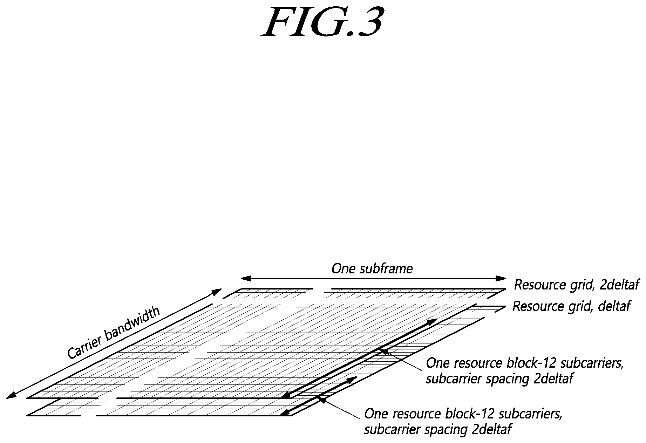

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

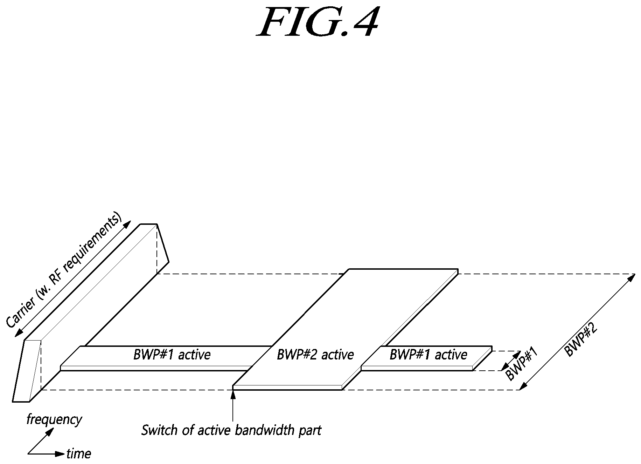

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

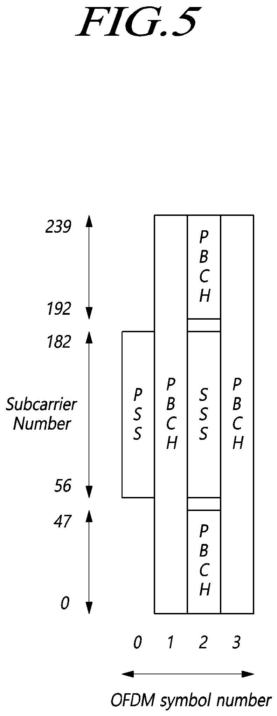

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

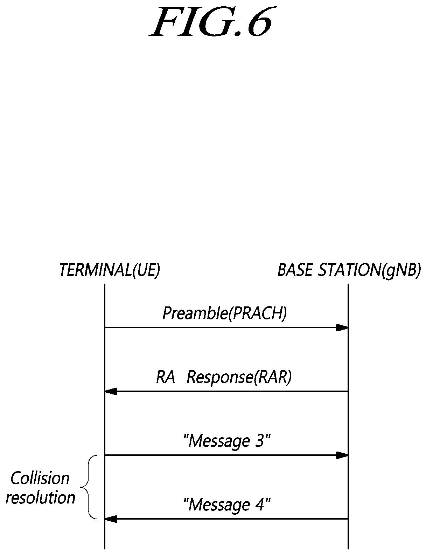

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

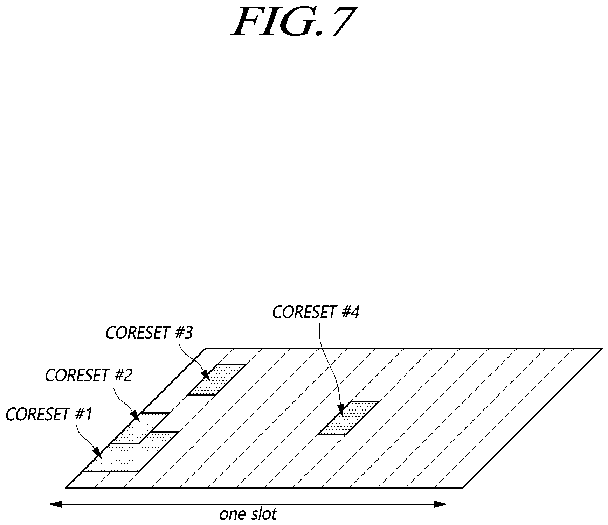

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

### Wider bandwidth operations

The typical LTE system supports scalable bandwidth operations for any LTE CC (component carrier). That is, according to a frequency deployment scenario, an LTE provider may configure a bandwidth of a minimum of 1.4 MHz to a maximum of 20 MHz in configuring a single LTE CC, and a normal LTE UE supports a transmission/reception capability of a bandwidth of 20 MHz for a single LTE CC (e.g., per component carrier).

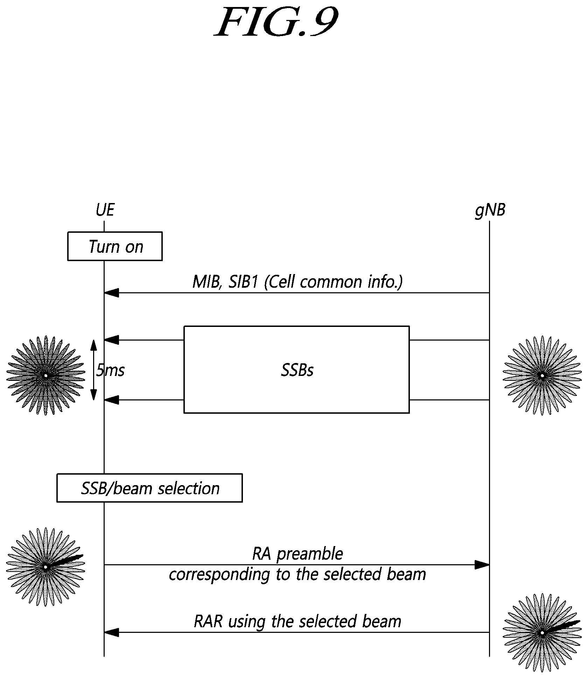

However, NR is designed to support UEs with different transmission/reception bandwidth capabilities over a single wideband NR CC. Accordingly, it is required to configure one or more bandwidth parts (BWPs) including subdivided bandwidths for an NR CC as shown FIG. 9, thereby supporting more flexible and broader bandwidth operation through configuration and activation of different bandwidth parts for respective UEs.

Specifically, one or more bandwidth parts may be configured through a single serving cell configured for a UE in NR, and the UE is defined to activate one downlink (DL) bandwidth part and one uplink (UL) bandwidth part for uplink/downlink data transmission/reception in the corresponding serving cell. In addition, in the case where a plurality of serving cells is configured for the UE (i.e., the UE to which CA is applied), the UE is also defined to activate one downlink bandwidth part and/or one uplink bandwidth part in each serving cell to perform uplink and/or downlink data transmission and reception using the radio resources of the corresponding serving cell.

Specifically, an initial bandwidth part for an initial access procedure of a UE may be defined in a serving cell; one or more UE-specific bandwidth parts may be configured for each UE through dedicated RRC signaling, and a default bandwidth part for a fallback operation may be defined for each UE.

It is possible to define the simultaneous activation and use of a plurality of downlink and/or uplink bandwidth parts according to the capability of the UE and the configuration of the bandwidth parts in a serving cell. However, NR rel-15 defined activation and use of only one downlink (DL) bandwidth part and one uplink (UL) bandwidth part at a time.

The disclosure relates to determining a beam for model monitoring and defining a new reference signal (RS) resource related thereto as a method for measuring the accuracy of deployed AI/ML for a UE capable of performing beam management using AI/ML.

### Beam management in 3GPP NR

The beam management method of the 3GPP NR may be divided into an initial access stage and a post-cell connection establishment stage. The UE performing the initial access procedure configures the initial Tx/Rx beam of the UE through the RACH procedure. To provide gNB tx.beam (e.g., gNB transmit beam) configuration to the UE without cell connection, the base station periodically and repeatedly transmits the SSBs mapped with beams in different directions (e.g., SSBs are transmitted every 20ms period within 5ms by default). The UE may select the qualified SSB through signal measurement for the periodically transmitted SSBs and notify the base station of information about the selected tx beam by transmitting the PRACH primer mapped for the SSB.

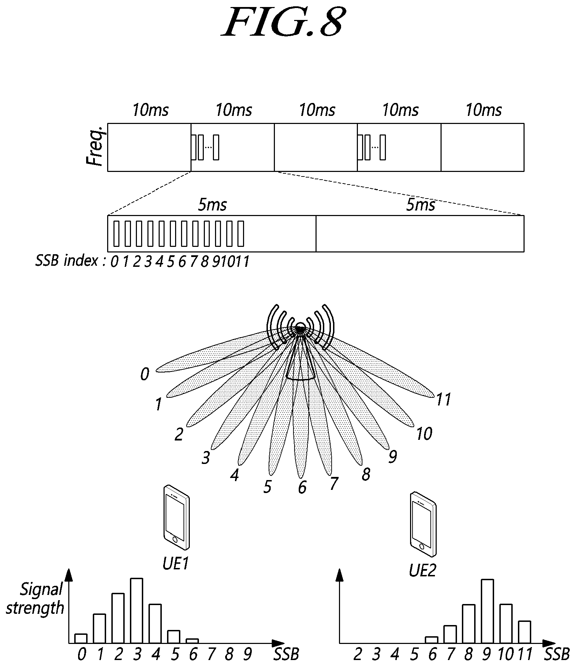

FIG. 8 is a view illustrating an operation in which two UEs perform initial beam management at two different positions during a beam transmission operation by a base station.

Referring to FIG. 8, the base station may transmit the synchronization signal block SSB using specific time frequency resources in a preset frame. In this case, the base station may perform a beam sweeping operation by forming various beams.

For example, the beams may be transmitted by being spatially divided from the beam indexes 0 to 11. If UE 1 performs a measurement on the SSB, the signal strength for beam index number 3, which matches the beam direction, is the largest, while the strength is measured as low for the surrounding beams, as illustrated in FIG. 8. Likewise, UE 2 may measure the signal strength for beam index number 9 by positional characteristics. Each UE may perform an initial access to the base station by performing a random access procedure based on the signal strength measurement result for the SSB.

FIG. 9 is an example view illustrating an initial access procedure of a UE and a base station.

Referring to FIG. 9, an initial access procedure performed by a UE in NR proceeds as follows.
1. The UE receives cell-related parameter information (e.g., PRACH information corresponding to each SSB) required for the initial connection step through the system information message.
2. The UE measures the RSRP for the periodically transmitted SSB.
3. The UE performs beam (SSB) selection based on the measurement result of the SSB. For example, the UE may select the beam exhibiting the highest RSRP based on the measurement result.
4. The UE may notify the base station of the selected initial beam information by transmitting the preamble belonging to the PRACH resource corresponding to the selected beam to the base station.
5. The UE may receive a random access response to the transmitted random access preamble through the selected beam. Thereafter, access to the initial cell may be performed through transmission/reception of Msg 3 and Msg 4.

As described above, the base station that does not know the position/beam information about the UE that first entered (i.e., a UE that performs a contention-based random access procedure (CBRA)) may commonly at the cell level set up to 64 beams for a beam setting of a UE with no connection. The UE performs an operation of sequentially measuring all beams to discover the optimal beams at its position. As the number of beams in the cell increases, a time delay may occur in beam selection and cell connection, and the UE may be required to measure more beams, which may increase the power consumption of the UE.

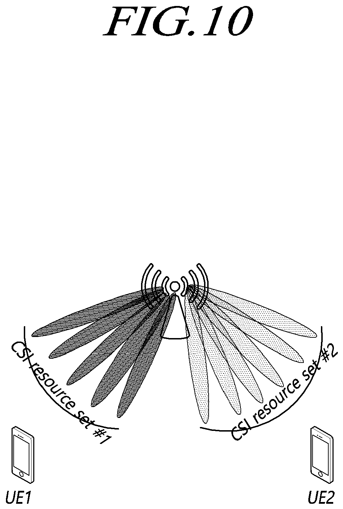

To address the foregoing issues, the base station may estimate the approximate position/beam of the initially accessing UE by mapping a wider beam for the SSB and, after the UE accesses the cell, may set a narrow beam through a beam refinement operation. However, while the narrow beam provides a high data rate to the UE, it is sensitive to the movement of the UE or environmental changes, making disconnections more likely. To that end, the base station allocates the CSI resource (CSI-RS/SSB) to which the candidate beam is mapped to the UE in a UE-specific manner as illustrated in FIG. 10, so that the UE continuously measures the ambient beam strength and reports the measurement result to the base station. This may be set by the base station through a CSI resource configuration and a CSI report configuration.

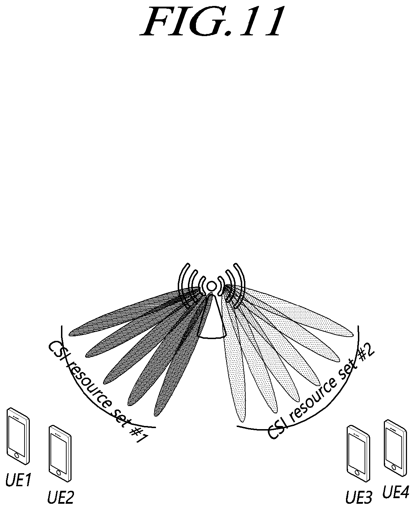

The UE configured with the beam report performs reporting based on the configuration of the base station through the measurement of the reference signal (RS) allocated to the UE. It follows the CSI framework defined by 3GPP. However, the UE-specific CSI configuration method has a problem in that as the number of UEs in the cell increases, the RS resources allocated per UE also increase rapidly. To alleviate the resource overhead problem, the base station may choose a method of allocating the same candidate beam (CSI resource) to UEs at similar positions, as illustrated in FIG. 11 (UE group-specific CSI resource configuration). However, if UEs with different mobility share the same resource, a problem arises where a new candidate beam resource should be allocated to UEs outside the resource area arises. If a UE with high/medium mobility is assigned minimum candidate beams as a way to reduce resource overhead, the UE experiences frequent RRC reconfiguration, and candidate beam reconfiguration through RRC causes a relatively large delay, which may cause beam disconnection. The base station may operate the candidate beam by appropriately increasing the number of beams belonging to the CSI resource to alleviate such an issue. However, a trade-off issue occurs in which from a UE perspective, the measurement burden increases due to the increased number of beams.

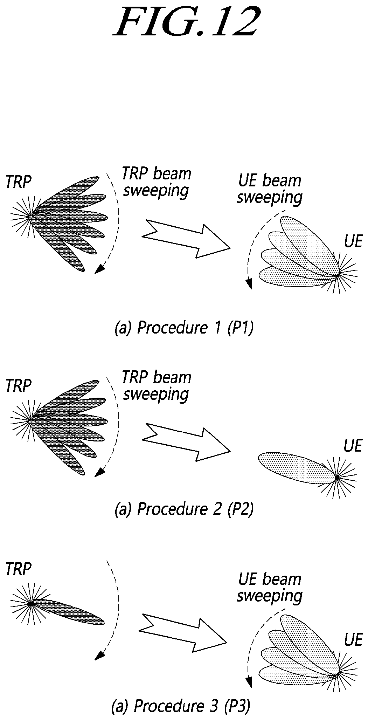

Currently in NR, beam management is generally categorized into three (P1, P2, and P3) in terms of the physical layer. Referring to FIG. 12, P1 refers to an operation of discovering a transmission/reception (tx/rx) beam pair while simultaneously performing UE beam sweeping and transmission/reception point (TRP) beam sweeping, similar to the beam configuration performed during the initial access procedure. The UE entering the connected mode identifies the beams, set via the CSI resource set configuration by the base station are to be swept, and performs signal strength measurements on the TRP beam. If the TRP beam of the UE is selected through P2, the base station continuously transmits the selected beam through P3. The UE may select a UE beam while conducting UE beam sweeping. The specific beam selection at this point is implementation dependent. This operation may be applicable to both DL/UL.

Beam sweeping uses a method for implicitly indicating the beam information by mapping it to the RS resource information, where the base station informs the UE of the reference signal resource information through a specific candidate beam (CSI resource set) setting. In other words, the base station is able to identify the beam information it has mapped through the index information implicitly associated with the RS using the RS resource indicator (RI), rather than informing the UE of the actual beam index. This is configured using the 3GPP CSI framework, and the UE implicitly reports RSRP information about four optimal beams RI to the base station by measuring the strength of RS for the resource configured by the base station.

The method for reporting this information also follows the RRC configuration of the base station and it is defined to be configured as one of three methods: periodic reporting, aperiodic reporting, and semi-persistent reporting.

To mitigate the delay in such beam search (measurement) and UE power consumption, it is considered to apply an AI/ML model. The radio interface may be enhanced with a function that enables improved support for an AI/ML-based algorithm to reduce complexity/overhead.

Key use cases for applying the application of the AI/ML model include the following.
o CSI frequency band enhancement, e.g., overhead reduction, enhanced accuracy, and prediction.
o Beam management, e.g., temporal and/or spatial domain prediction to reduce overhead and standby time and enhance beam selection accuracy.
o Enhance positioning accuracy for various scenarios including scenarios with harsh NLOS conditions.

In the regard, the following terms may be defined for AI/ML-applied wireless communication.

Data collection refers to a process by which a network node, management entity, or UE collects data for the purpose of AI/ML model training, data analysis, and inference.

The AI/ML model refers to a data-driven algorithm that produces outputs from inputs by applying AI/ML technology. AI/ML model training refers to the process of learning input-output relationships from data and producing an AI/ML model ready for inference. AI/ML model inference refers to the process of generating outputs from inputs using a trained AI/ML model. AI/ML model validation refers to a sub process of training that evaluates the quality of the AI/ML model using data sets different from those used for model training. AI/ML model testing refers to a sub process of training that evaluates the performance of the final AI/ML model using data sets different from those used for model training and validation. Unlike AI/ML model validation, the testing does not involve any subsequent model adjustments.

The UE-side AI/ML model refers to an AI/ML model in which inference is performed entirely by the UE. The Network-side AI/ML model refers to an AI/ML model in which inference is performed entirely on the network. One-sided AI/ML model refers to a UE-side AI/ML model or a network-side AI/ML model. Two-sided AI/ML model refers to a paired AI/ML model in which joint inference is performed. Here, joint inference refers to AI/ML inference that is collaboratively performed by both the UE and network. In other words, the initial partial inference is performed by the UE, and the remaining inference is carried out by the gNB or vice versa.

AI/ML model transfer refers to transmitting an AI/ML model over a wireless interface, either as parameters of a known model structure at the receiving side or a new model with the parameters. The transfer may involve either a full model or a partial model. Model download refers to the transferring a model from the network to the UE. Model upload refers to transferring a model from the UE to the network.

Federated learning (or federated training) refers to a machine learning technique in which the AI/ML model is trained across multiple distributed edge nodes (e.g., UE, gNB), each performing local model training using its own local data samples. This technique involves multiple rounds of model interactions without exchanging local data samples. Offline field data refers to data collected in the field and used for offline AI/ML model training. Online field data refers to data collected in the field and used for real-time or online AI/ML model training.

Model monitoring refers to the procedure for monitoring (e.g., evaluating) the inference performance of an AI/ML model.

Supervised learning refers to the process of training a model using inputs paired with corresponding labels. Unsupervised learning refers to the process of training a model without labeled data. Semi-supervised learning refers to the process of training a model by using a combination of labeled data and unlabeled data. Reinforcement learning (RL) refers to the process of training the AI/ML model using inputs (i.e., states) and feedback signals (i.e., rewards) based on the model's output (i.e., actions) in an interactive environment.

Model activation refers to activating (e.g., enabling) an AI/ML model to perform a specific function. Model deactivation refers to deactivating (e.g., disabling) an AI/ML model from performing a specific function. Model switching refers to deactivating the currently active AI/ML model and activating another AI/ML model for a specific function.

When applying an AI/ML model, the following network-UE collaboration levels are considered.
1. Level x: No collaboration.
2. Level y: Signaling-based collaboration without model transfer.
3. Level z: Signal-based collaboration with model transmission.

BM-Case1 and BM-Case2 are defined to support characterization and basic performance evaluation for AI/ML-based beam management as follows.

BM-Case1: downlink (DL) beam prediction in the spatial domain for beam Set A, based on the measurement results of beam Set B of the beams.

BM-Case2: downlink (DL) beam prediction in the temporal domain for beam set A, based on the past measurement results of beam set B.

In this case, for both BM-Case1 and BM-Case2, the beams sets A and B may reside within the same frequency range.

Set A and Set B may be configured differently: for example, Set B may be a sub set of Set A, or Set A may include narrower beams while Set B includes wider beams. Here, Set A may be defined for DL beam prediction and Set B may be defined for DL beam measurement.

In relation to a life cycle management (LCM) procedure for an AI/ML model, the AI/ML model may have a model ID including a model functionality and/or information related to at least some AI/ML operations.

If determined by the network in relation to model selection, activation, deactivation, conversion, and replacement for the UE-side model and the both-side model, it may be initiated by the network. Alternatively, it may be initiated by the UE to request from the network. When the UE makes the determination, the UE's determination may be reported to the network according to the event configured by the network.

Hereinafter, a model management method in beam management using artificial intelligence and machine learning is described in detail with reference to related drawings.

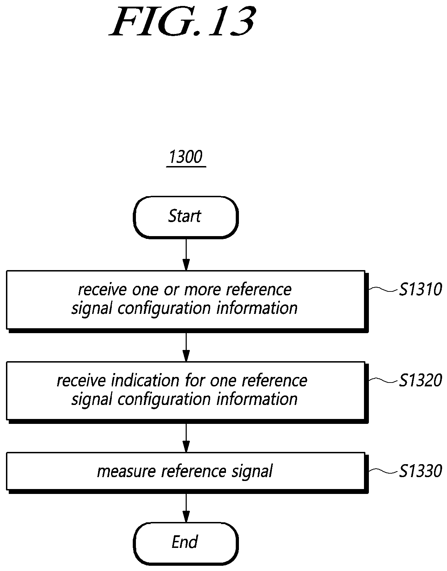

FIG. 13 is a flowchart illustrating a procedure 1300 of a UE to perform model management in beam management using artificial intelligence and machine learning according to an embodiment.

Referring to FIG. 13, the UE may receive configuration information for one or more reference signal (RS) resource sets configured to correspond to one or more AI/ML models or functionalities, respectively, used for a predetermined purpose (S1310).

According to an embodiment, the predetermined purpose of using the AI/ML model or AI/ML functionality may be a sub use case to which the AI/ML model may be applied in various use cases in wireless communication. For example, the predetermined purpose of using the AI/ML model or AI/ML functionality may be a beam prediction procedure used in CSI-RS transmission. However, this is an example, and if the technical scope of the disclosure may be applied in relation to the AI/ML model or AI/ML functionality, the disclosure is not limited to a specific purpose or procedure. The following description assumes a beam prediction procedure used for CSI-RS transmission.

According to an embodiment, one or more AI/ML functionalities may be configured for each sub use case, and one or more AI/ML models may be configured for each AI/ML functionality. In this case, the one or more AI/ML models may be configured to have different input/output value ranges (dimensions) according to various types context/state information about the UE as well as the capability/configuration/scenario of the UE. For example, a UE moving at a high speed may require a higher number of candidate beams Set A than a UE without mobility. As described above, by configuring different models requiring different beam sets, the UE's beam measurement and the set of inferred beams may be differently configured accordingly.

According to an embodiment, the one or more reference signal resource sets may be each configured based on information about a reference signal preferred as an input to the one or more AI/ML models or functionalities configured for the UE. In other words, in relation to beam prediction used for CSI-RS transmission, among all reference signals configurable for the UE according to the UE's capability, a set of reference signals preferred or supported as an input to each of the AI/ML model or functionality may be configured as a reference signal resource set. In this case, a measurement value for the reference signal may be input to an AI/ML model or functionality, corresponding to the one reference signal resource set to infer all reference signals. In other words, if the measurement value for the reference signal is input to the AI/ML model or functionality, all reference signals may be inferred through the AI/ML model or functionality.

For example, all the reference signals for AI/ML model 1 may be composed of a set of beams indexed from 0 to 64, and the reference signal resource set may be composed of reference signal resources respectively corresponding to the eight beams selected from among the corresponding beams. Similarly, all the reference signals for AI/ML model 2 may be composed of a set of beams indexed from 0 to 32, and the reference signal resource set may be constituted of reference signal resources respectively corresponding to the four beams selected from among the corresponding beams. Likewise, all the reference signals for AI/ML model 3 may be composed of a set of beams indexed from 0 to 16, and the reference signal resource set may be composed of reference signal resources respectively corresponding to the two beams selected from among the corresponding beams.

The UE may receive configuration information about one or more reference signal resource sets configured to correspond to one or more AI/ML models or functionalities, respectively, through higher layer signaling such as RRC signaling. In this case, configuration information about all reference signals corresponding to the configuration information about the one or more reference signal resource sets may also be received.

Referring back to FIG. 13, the UE may receive indication information about one reference signal resource set selected from among the one or more reference signal resource sets (S1320) and may measure a signal strength or signal quality for the reference signal based on the one reference signal resource set (S1330).

According to an embodiment, one reference signal resource set may be selected by the base station. In this case, the base station may select one reference signal resource set from among the one or more reference signal resource sets. The base station may request assistance information from the UE and determine whether to switch the AI/ML model or functionality based on the assistance information received from the UE. According to an example, the one reference signal resource set may be selected based on capability information about the UE including an AI/ML model or functionality supported by the UE, state information about the UE, or preconfigured criteria.

In this case, indication information about the one reference signal resource set may be received using at least one of downlink control information, a medium access control (MAC) control element (CE), or higher layer signaling.

According to another embodiment, one reference signal resource set may be selected by the UE. In this case, the one reference signal resource set may be selected based on capability information about the UE including an AI/ML model or functionality supported by the UE, state information about the UE, or preconfigured criteria. The UE may receive criteria information for determining one reference signal resource set from the base station. The criteria information may be configured as reference values for at least one of the UE's moving speed, direction, position, data type (DRB), RSRP, battery information, UE antenna configuration information, and model accuracy.

In this case, unlike the example shown in FIG. 13, the UE may transmit indication information about one reference signal resource set to the base station using at least one of UCI, MAC CE, or higher layer signaling.

If one indicated reference signal resource set is first indicated between the UE and the base station, the AI/ML model or functionality corresponding to the indicated reference signal resource set may be activated. Alternatively, if one indicated reference signal resource set is different from the reference signal resource set currently used for beam prediction of reference signals between the UE and the base station, a switch may be made to the AI/ML model or functionality corresponding to the indicated reference signal resource set.

The UE may receive the reference signal through the selected one reference signal resource set. In other words, the UE may expect reference signals included in the reference signal resource set indicated by the indication information to be transmitted, and may measure the signal strength or signal quality of the corresponding reference signals.

Thereafter, the UE may perform AI/ML-based beam management using the measured beam information. When the UE performs AI/ML model inference, the UE may infer the beam strength for all reference signals using the measured beam information as an input value. The UE may select the top N beams from among the inferred values and report the selected beams to the base station. When the base station performs AI/ML model inference, the UE may report all or a portion of the measured beam information to the base station.

The UE may receive the selected beam indication from the base station. Upon receiving indication of a change for the reference signal resource set, the UE may measure the strength of the beam transmitted through the reference signal for the indicated reference signal resource set.

According to the embodiments described above, models may be managed in beam management using artificial intelligence and machine learning. Further, it is possible to measure a new beam set faster and more efficiently by preconfiguring a set of reference signal resources mapped to related beam information in AI/ML model management and dynamically transmitting/receiving an appropriate reference signal resource according to the switching of a model/state/scenario.

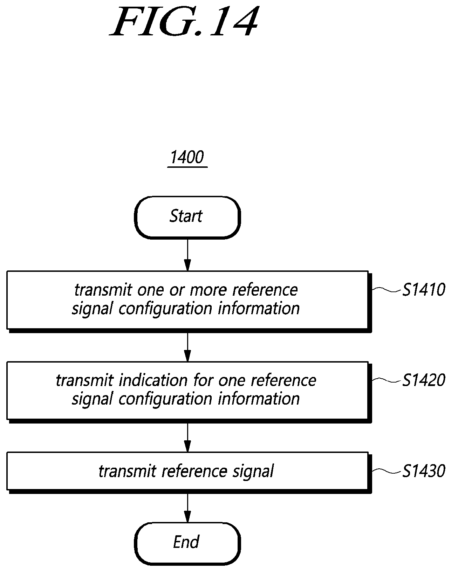

FIG. 14 is a flowchart illustrating a procedure 1400 of a base station to perform model management in beam management using artificial intelligence and machine learning according to an embodiment. The description made above in connection with FIG. 13 may be skipped to avoid duplicative description and, in this case, the skipped description may be equally applied to the base station unless it contradicts the technical spirit of the present invention.

Referring to FIG. 14, the base station may transmit, to the UE, configuration information about one or more reference signal (RS) resource sets configured to correspond to one or more AI/ML models or functionalities, respectively, used for a predetermined purpose (S1410).

According to an embodiment, the predetermined purpose of using the AI/ML model or AI/ML functionality may be a sub use case to which the AI/ML model may be applied in various use cases in wireless communication. For example, the predetermined purpose of using the AI/ML model or AI/ML functionality may be a beam prediction procedure used in CSI-RS transmission.

According to an embodiment, one or more AI/ML functionalities may be configured for each sub use case, and one or more AI/ML models may be configured for each AI/ML functionality. In this case, the one or more AI/ML models may be configured to have different input/output value ranges (dimensions) according to various types context/state information about the UE as well as the capability/configuration/scenario of the UE. For example, a UE moving at a high speed may require a higher number of candidate beams Set A than a UE without mobility. As described above, by configuring different models requiring different beam sets, the UE's beam measurement and the set of inferred beams may be differently configured accordingly.

According to an embodiment, the one or more reference signal resource sets may be each configured based on information about a reference signal preferred as an input to the one or more AI/ML models or functionalities configured for the UE. In other words, in relation to beam prediction used for CSI-RS transmission, among all reference signals configurable for the UE according to the UE's capability, a set of reference signals preferred or supported as an input to each of the AI/ML model or functionality may be configured as a reference signal resource set. In this case, a measurement value for the reference signal may be input to an AI/ML model or functionality corresponding to the one reference signal resource set to infer all reference signals. In other words, if the measurement value for the reference signal is input to the AI/ML model or functionality, all reference signals may be inferred through the AI/ML model or functionality.

The base station may transmit configuration information about one or more reference signal resource sets configured to correspond to one or more AI/ML models or functionalities, respectively, through higher layer signaling such as RRC signaling. In this case, configuration information about all reference signals corresponding to the configuration information about the one or more reference signal resource sets may also be transmitted.

Referring back to FIG. 14, the base station may transmit, to the UE, indication information about one reference signal resource set selected from among the one or more reference signal resource sets (S 1420) and transmit the reference signal to the UE based on the selected reference signal resource set (S1430).

According to an embodiment, one reference signal resource set may be selected by the base station. In this case, the base station may select one reference signal resource set from among one or more reference signal resource sets. The base station may request assistance information from the UE and determine whether to switch the AI/ML model or functionality based on the assistance information received from the UE. According to an example, the one reference signal resource set may be selected based on capability information about the UE including an AI/ML model or functionality supported by the UE, state information about the UE, or preconfigured criteria.

In this case, indication information about the one reference signal resource set may be transmitted using at least one of downlink control information, a medium access control (MAC) control element (CE), or higher layer signaling.

According to another embodiment, one reference signal resource set may be selected by the UE. In this case, the one reference signal resource set may be selected based on capability information about the UE including an AI/ML model or functionality supported by the UE, state information about the UE, or predetermined criteria. The base station may transmit, to the UE, criteria information for determining one reference signal resource set to be used by the UE. The criteria information may be configured as reference values for at least one of the UE's moving speed, direction, position, data type (DRB), RSRP, battery information, UE antenna configuration information, and model accuracy.

In this case, unlike the example shown in FIG. 14, the base station may receive, from the UE, indication information about one reference signal resource set to the base station using at least one of UCI, MAC CE, or higher layer signaling.

If one indicated reference signal resource set is first indicated between the UE and the base station, the AI/ML model or functionality corresponding to the indicated reference signal resource set may be activated. Alternatively, if one indicated reference signal resource set is different from the reference signal resource set currently used for beam prediction of reference signals between the UE and the base station, a switch may be made to the AI/ML model or functionality corresponding to the indicated reference signal resource set.

The base station may transmit a reference signal through the selected reference signal resource set. In this case, the UE may expect that reference signals belonging to the reference signal resource set indicated by the indication information will be transmitted, and measure the signal strength or signal quality of the corresponding reference signals.

Thereafter, the UE may perform AI/ML-based beam management using the measured beam information. When the UE performs AI/ML model inference, the UE may infer the beam strength for all reference signals using the measured beam information as an input value. The base station may receive a report for the top N beams selected from among the inferred values by the UE. When the base station performs AI/ML model inference, the base station may receive a report for all or a portion of the measured beam information from the UE.

The base station may transmit the selected beam indication to the UE. Upon receiving the indication of a change for the reference signal resource set, the UE may measure the strength of the beam transmitted through the reference signal for the indicated reference signal resource set.

According to the embodiments described above, models may be managed in beam management using artificial intelligence and machine learning. Further, it is possible to measure a new beam set faster and more efficiently by preconfiguring reference signal resources mapped to related beam information in AI/ML model management and dynamically transmitting/receiving an appropriate reference signal resource according to the switching of a model/state/scenario.

Hereinafter, each embodiment related to the model management method in beam management using artificial intelligence and machine learning is described in detail with reference to the related drawings.

The typical beam management operation in NR causes problems such as increases in system overhead and power consumption of UEs as the numbers of beams and UEs increases. Further, for a UE in the initial cell connection stage, a delay in cell connection may occur because the UE selects the initial beam only after measuring all available beams. To address this issue, it has been proposed to use the AI/ML model that predicts overall beam strength based on some beam measurements. However, detailed procedures or methods therefor have not yet been defined. The present disclosure aims to propose a more specific operation for model monitoring as a part of effective AI/ML-based beam management.

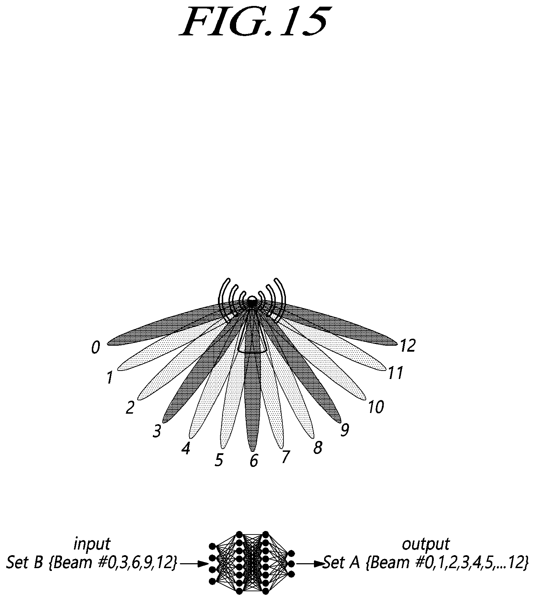

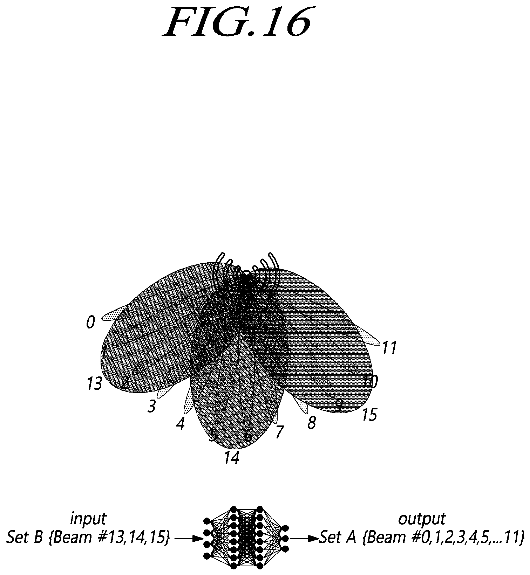

Currently, discussions on AI/ML for beam management are underway, with agreement to explore spatial DL beam prediction (BM-Case 1) and temporal DL beam prediction (BM-Case 2) as sub use cases. This enables prediction of the beam strength for Set A based on the measurement of the beams in Set B. In the case of spatial DL beam prediction, as illustrated in FIG. 15, Set B may be configured as a subset of Set A. Alternatively, as illustrated in FIG. 16, Set B may be composed of wide beams, while Set A may be composed of narrow beams. For temporal DL beam prediction, in addition to the cases of FIGS. 15 and 16, a configuration where Set A and Set B are identical may also considered. Temporal DL beam prediction involves forecasting future beam information based on past measurements. It may also leverage spatial DL beam prediction to first predict the entire beam set, which is then reused for temporal prediction. Accordingly, the spatial DL beam prediction cases shown in FIGS. 15 and 16 may serve as a basic beam prediction method.

In AI/ML-based beam prediction, the procedure may vary depending on the location of the AI/ML model and which entity perform training/inference. The term "one-sided (AI/ML) model" and "two-sided (AI/ML) model" refers whether inference is performed solely by one node or jointly by the network (NW) and the UE. For AI/ML based beam management (BM), only one-sided model is currently considered. The collaboration level may be determined based on the location of training and the beam management (BM) may be implemented in one of the following four forms.
1. Perform AI/ML model training and inference on the network side.
2. Perform AI/ML model training and inference on the UE side.
3. Perform AI/ML model training on the network side and perform AI/ML model inference on the UE side.
4. perform AI/ML model training on the UE side and perform AI/ML model inference on the network side.

Cases 1 and 2 above do not require model transfer to the air interface since both training/inference operate in one node. However, it may be required to signal information necessary to operate the AI/ML model. This may correspond to the currently defined collaboration level y (transmission/reception of only signaling without model transfer). Cases 3 and 4 above require model transfer to the air interface since training and inference operate in different nodes. This may correspond to the currently defined collaboration level z.

In relation to AI/ML, one or more AI/ML models may be present for each sub use case/functionality of a specific use case. The one or more models may require different input/output value ranges (dimensions) according to the UE capability/configuration/scenario as well as various UE context/state information.

For example, a UE moving at a high speed may require a higher number of candidate beams Set A than a UE without mobility. This means that, by defining different models requiring different beam sets, the UE's beam measurement and the set of inferred beams may be differentiated. Alternatively, the UE positioned in the cell center only needs to predict/infer the beams in the cell, but the UE positioned at the cell boundary may also need to predict/infer the beams of the neighboring cell. Additionally, a UE that transmits and receives data requiring a high data rate may require prediction/inference on a narrower beam set compared to a UE that transmits and receives data requiring a low data rate. Furthermore, when the battery of the UE is in a heating state or in a power saving mode, it may be required to measure a smaller number of beams. Alternatively, when the accuracy of the model currently used by the UE is lowered, the model accuracy may be increased through more beam measurements. This requires inference through different models trained using different data for each circumstance, or even for one model , it may require input of different numbers/dimensions according to the circumstance, so that the UE needs to measure different beams constituted of different Sets B according to the circumstance/state information. Accordingly, the model switching and the measurement beam (set B) configuration switching should be quickly applied to suit the context of the UE.

Further, a method of transmitting UE information to the base station has been proposed as a way for the base station to selectively use an appropriate model based on UE state information. However, there are concerns about directly transmitting/receiving UE information because there may be a proprietary or privacy issue with the UE's internal information being shared over the air between the base station and the UE. Therefore, it is necessary to consider a method of allowing the UE to identify its state to selectively apply the model without sharing the state information about the UE.

The disclosure proposes a method for effectively performing a switch of an input/output value or a model appropriate for the UE's context without sharing UE state information when performing beam management using AI/ML based on the above description.

The disclosure proposes a method for providing a quick switch to a model suitable for the context of the UE when a beam management procedure is performed using an AI/ML model between the base station (NW) and the UE. To that end, the UE may receive one or more reference signal resource sets (CSI resource set(s)) for one or more models from the base station in advance, and may activate and use one reference signal resource set most suitable for the UE's context. In other words, the UE may receive a reference signal resource mapped to Set B for one or more models corresponding to a specific sub use case (e.g., spatial beam prediction or temporal beam prediction) from the base station and dynamically activate one of the received candidate Sets B.

Specifically, the technology of the disclosure is described in the following two cases according to the subject activating a specific CSI resource set.
- Case 1. When the UE activates one CSI resource set
- Case 2. When the base station activates one CSI resource set

First, when the UE activates one CSI resource set, criteria information for determining the same may be transmitted together with an RRC message for setting the CSI resource set. Alternatively, the criteria information may be preconfigured in the specifications. The criteria information may be configured as reference values (thresholds) for at least one of the UE's moving speed, direction, position, data type (DRB), RSRP, battery information, UE antenna configuration information, and model accuracy. In this regard, when the base station performs model training, the base station may determine a reference value suitable for the model and transmit the determined reference value to the UE as a message. When the UE performs model training, to inform the base station of information about the model/Set B selected by the UE, the content for such reporting may be defined in the specifications as a trigger condition for changing/transmitting the indicator. When the UE selects the CSI resource set, it is necessary to inform the base station of the selected CSI resource set. In other words, the UE should transmit a message including an indicator indicating the selected CSI resource set to the base station. The selection may be triggered when a new condition is met whenever the state of the UE changes.

If the base station activates the CSI resource set, the condition for activating the specific CSI resource set may depend on the implementation of the base station. In this case, the UE may measure the beam according to an indication transmitted by the base station. In other words, in case 2, the base station should transmit a message including the indicator indicating the selected CSI resource set to the UE. The indicator indicating the selected CSI resource set may be included in the message for setting one or more CSI resource sets. Alternatively, the indicator indicating the selected CSI resource set may be separately delivered through a new message definition thereafter. This may be transmitted by the base station at the time when it is determined that it is required to apply a new model to the UE. For the determination, the base station may request assistance information from the UE. The UE receiving the indication message for the CSI resource set may measure the beam strength by activating only the indicated CSI resource set and receiving the reference signal RS belonging to the corresponding set.

The beam measurement result value for Set B (e.g., indicated CSI resource set) measured through the above-described two cases may then be used for beam inference in the UE or base station (i.e., AI/ML based beam management).

The configured CSI resource set(s) defined in the disclosure may be applied in various ways as follows according to the definition of the AI/ML model.
- When a different beam measurement (Set B) and beam inference (Set A) is required for a specific functionality, when they are all defined as different models:
   In other words, when models 1, 2, and 3 for beam management are configured/present in a specific UE, the UE should measure (set B) and/or infer (Set A) a different beam set for each model to obtain the input/output value suitable for each model.

For example, it may be defined as Set A (beams 0-64) and Set B (eight beams) for model 1, Set A (beams 0-32) and Set B (four beams) for model 2, and Set A (beams 0-16) and Set B (two beams) for model 3. In this case, three CSI resource sets mapped to the beam of Set B for each of models 1, 2, and 3 may be configured in the UE.
- When a different beam measurement (Set B) and beam inference (Set A) are required for functionality:
   In other words, when different beam configurations are defined as different functionalities, it may correspond to performing, e.g., activation/deactivation/switching on different Sets B through functionality-based LCM.

When functionalities 1, 2, and 3 for beam management are configured/present in a specific UE, the UE should measure (set B) and/or infer (Set A) a different beam set for each functionality to obtain the input/output value suitable for each functionality.

For example, it may be defined as Set A (beams 0-64) and Set B (eight beams) for functionality 1, Set A (beams 0-32) and Set B (four beams) for functionality 2, and Set A (beams 0-16) and Set B (two beams) for functionality 3. In this case, three CSI resource sets mapped to the beam of Set B for each of functionalities 1, 2, and 3 may be configured in the UE.

- When one or more sub models requiring different beam measurements (Set B) and beam inferences (Set A) for one model are defined according to the dimension of the input/output:
In other words, if model 1 for beam management is configured/present in a specific UE, a combination of output values according to the input value to the model may be set as illustrated in sets 1, 2, and 3, which requires measurement and/or inference of a different beam set for each combination.

For example, it may be defined as Set A (beams 0-64) and Set B (eight beams) for SET 1 of model 1, Set A (beams 0-32) and Set B (four beams) for SET 2 of model 1, and Set A (beams 0-16) and Set B (two beams) for SET 3 of model 1. In this case, three CSI resource sets mapped to the beams of three Sets B for the corresponding model may be configured in the UE.

The CSI resource set described in the disclosure may be interpreted to have the same meaning as the csi-RS-ResourceSetList or CSI-ResourceConfig of the current standard.

The UE may be preconfigured with one or more CSI resource sets(s) (hereinafter referred to as configured CSI resource sets(s) in the disclosure) for a specific sub use case (e.g., spatial beam prediction, temporal beam prediction, etc.). In this case, the conventional CSI resource set-configured RRC message (e.g., *ServingCellConfig with csi-MeasConfig including CSI-ResourceConfig and*/*or CSI-SSB-ResourceSet*) may be used. However, unlike in the conventional art, none of the CSI resource sets configured for beam prediction are configured and, at a specific time, only a specific set (hereinafter, referred to as an active CSI resource set in the disclosure) may be activated.

The base station may indicate one default CSI resource set through the corresponding RRC message or determine to designate a specific index (e.g., CSI resource set id or CSI resource configuration id #0) as the default set. The default CSI resource set means reference signal resource information for beam measurement of the UE provided as default by the base station when there is no special information exchange between the UE and the base station (i.e., when the base station, or the UE, does not transmit/receive signaling indicating one set to/from the UE, or the base station).

Alternatively, if a periodic CSI resource is configured to the UE as in the conventional art and beam measurement and reporting starts from the time when the RRC message is received, the UE may start measuring beam strength through the reference signal transmitted through the resource indicated as the default CSI resource set among one or more configured CSI resource set(s). However, in Case 1, if the UE wants to select another resource set/model/functionality, the UE may select one/some of one or more configured resource bundles and inform the base station of the index for the corresponding CSI resource set. Accordingly, a set (set B) of beams to be measured between the base station and the UE may be dynamically changed.

Next, a signaling method for selecting at least one of one or more configured CSI resource sets(s) and indicating the selected set to the base station or the UE is proposed. The corresponding signaling may be transmitted through a PHY control channel, a MAC CE, or an RRC message, and the message indicating the same is not limited. However, one of the following may be used as an indicator for indicating the information.
- index/ID information received from the RRC message when the configured CSI resource set is configured; or
   This is logical index information allocated per UE/per message, and may be defined by using the conventional csi-ResourceConfigId/SetId as it is.

For example, if x, y, and z are configured, as csi-ResourceConfig, to the UE, and the config's for beam prediction are x and y, only one of x and y may be used as an active csi-ResourceConfig. The UE and the base station may use the id selected out of x or y in the indicator as it is.
- Logical ID mapped to Set B configured for beam prediction is mapped and used; or
   When one or more sets B for specific beam prediction are configured, an ID for Set B may be newly allocated, and a corresponding Set B ID may be mapped for each configured csi-ResourceConfig/Set allocated for beam prediction.

For example, when x, y, and z are configured as csi-ResourceConfig to the UE, and x and y are used as configurations for beam prediction, the set B IDs for csi-ResourceConfig x and y may be mapped as 0 and 1 and, to activate a specific CSI resource set, set B ID may be used as follows.
CSI-ResourceConfigId x - set B Id #0
CSI-ResourceConfigId y - set B Id #1
CSI-ResourceConfigId z - none
   - AI/ML model (functionality) id is mapped and used.

When the configured CSI resource set is mapped for each model, the model ID may be used as an indicator for indicating the same. In this case, the model ID may be designed to have a hierarchy as a method for allocating a model ID for each use case. For example, spatial beam prediction may be set as LCM 0, and temporal beam prediction may be set as LCM 1.

For example, when x, y, and z are configured as csi-ResourceConfig to the UE, and x and y are used as configurations for beam prediction, the model ids for csi-ResourceConfig x and y may be mapped and, to activate a specific CSI resource set, the model id may be used as follows.
CSI-ResourceConfigId x - model Id #0
CSI-ResourceConfigId y - model Id #1
CSI-ResourceConfigId z - none
   - When an indicator having the same meaning as indicating a specific RS resource bundle in the above-described method is defined, they all may be interpreted to have the same meaning.

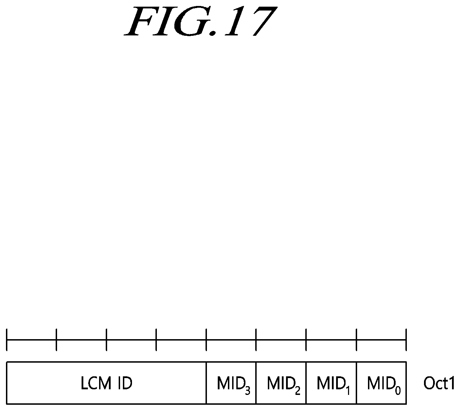

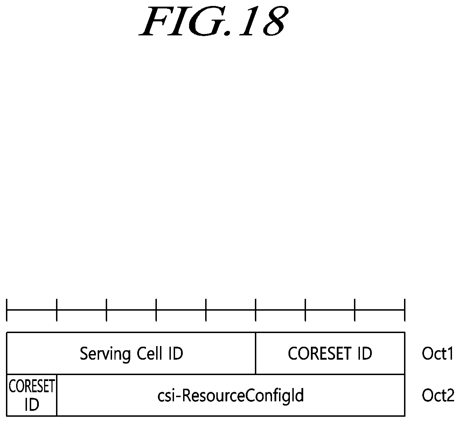

When the information about the CSI resource config/set ID defined by the above-described content is transmitted/received through the PHY control channel, it may be transmitted through the PDCCH or PUCCH, and a new DCI or UCI for that purpose may be defined. Alternatively, when the information about the CSI resource config/set ID is transmitted/received through MAC control information, a new MAC CE may be defined. In this case, as illustrated in FIGS. 17 and 18, a MAC CE with a new format may be defined. Alternatively, the information about the CSI resource config/set ID may be transmitted in an RRC message. However, to apply it to the system more dynamically and quickly, it may be preferable to use MAC CE. In addition to the above-described content, the method for activating the corresponding CSI resource set may also be defined to be performed through a model management-related procedure (life cycle management). In other words, transmission/reception of a message for model deactivation/activation/switching may be defined so that transmission/reporting of the CSI resource set mapped to the corresponding model is deactivated/activated/switched through the CSI configuration message according to the information (ID) about the model indicating deactivation/activation/switching.

There may be one or more indicated CSI resource sets. In this regard, when the UE indicates to the base station at least one CSI resource set suitable for the model/functionality available in the current condition of the UE, this may be defined as an applicable functionality/model/CSI resource set. If there are one or more applicable functionalities/models/CSI resource sets of the UE, the base station may select one of the applicable CSI resource sets received from the UE. In this case, the base station may transmit, to the UE, signaling instructing to activate only the selected CSI resource set and activate and transmit only the DL RS belonging to the indicated CSI resource set. In other words, the UE instructed to activate a specific CSI resource set may measure only DL RSs for the corresponding CSI resource set and use the same for model inference.

The disclosure may require an additional procedure depending on whether the UE performs model training or whether the base station performs model training. If the UE performs model training, the UE needs to inform the base station that one or more resource information is needed for the beam prediction and transfer information about Set A and Set B for beam measurement for each model/function in advance. This may be transferred in advance through a new model management message/procedure that manages information related to the capability negotiation of the UE or the AI/ML model. When the base station performs model training, corresponding information transmission may be omitted. In this case, the transmitted information may be defined as supported functionality/model, etc. For example, a supported/preferred configuration of DL RS transmission for Set A/B/monitoring beams may be one of them.

Hereinafter, more embodiments will be described.

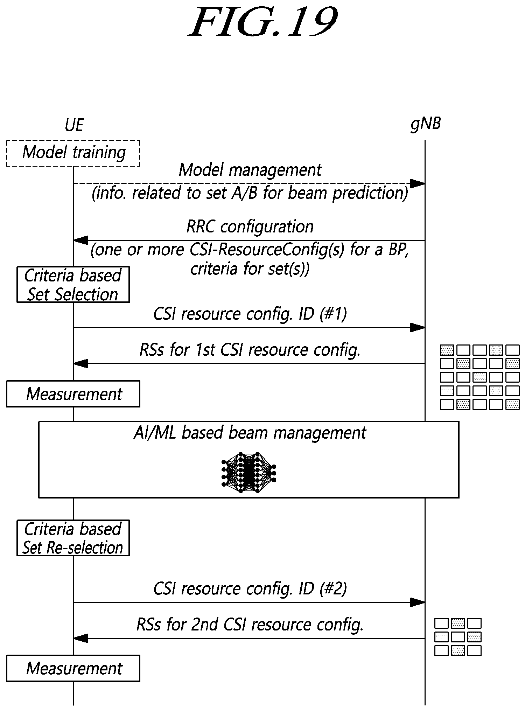

First, it is an embodiment of a case where the UE selects one active CSI resource configuration. FIG. 19 is a signal flowchart illustrating operations of a UE and a base station when the UE selects one reference signal resource set according to an embodiment.

### (Operations of the UE)

(When model training is performed by the UE, and the model is managed by the UE) The UE may transmit, to the base station, information about Set A and Set B suitable for each model (e.g., beam index and/or beam pattern, supported/preferred configuration of DL RS transmission, etc.). When there are one or more models configurable for a specific beam prediction operation, one or more Set A/B information sets may be reported.
1. The UE may receive one or more CSI resource configuration(s)/Set(s) mapped to Set B of the AI/ML model for beam prediction from the base station.

Each CSI resource set/config may be mapped to a specific model or specific beams of the specific model. In other words, the CSI resource config ID and the model ID and/or Set ID may be mapped.

A default CSI resource set/conFIG. may be designated. CSI resource set mapped to model id or set id #0, or csi-resourceConfigId #0 may be set, or the base station may designate a specific CSI resource set/conf as default.

When switching the model according to characteristic information about the UE, criteria for the model switching may be set for each model as follows. This may be set by the base station through the corresponding RRC message or determined to be defined in the specifications. For example, if three different models are configured for temporary beam prediction, the following criteria may be set.
- Model ID #0 - CSI resource set #x: when UE speed<= 30 km/h
- Model ID #1 - CSI resource set #y: when 30 km/h < UE speed <= 60 km/h
- Model ID #2 - CSI resource set #z: when UE speed > 60 km/h

In this case, it may be preferable to map one CSI report configuration to one or more configured CSI resource sets(s)/config(s) for the corresponding beam prediction.

2. The UE may select a configuration/set(s) most suitable for its current circumstance from among the configured CSI resource config(s)/set(s) and notify the base station of the same. In other words, the UE may request the base station to transmit a reference signal according to the selected configuration/set.

In this case, indicated CSI resource config/set information may be transmitted in the UCI/MACCE/RRC message.

The UE that has transmitted the information expects RSs belonging to the CSI resource config/set indicated later to be transmitted, and may measure the beam strength through the corresponding RS(s).

3. The UE may perform AI/ML based beam management using the measured beam information.

If the UE performs model inference, the UE may infer the beam strength for Set A using the measured beam information as a model input value. The UE may transmit information on the top N beams to the base station and receive a beam identification from the base station.

If the base station performs model inference, the UE may transmit the whole or part of the measured beam information to the base station. The UE may receive beam indication from the base station.

4. The UE may indicate/request a CSI resource config/set switching.

When CSI resource config/set switching is triggered by the defined criteria, the UE may transmit a message indicating activation of the new CSI resource config/set to the base station.

5. The UE may expect a reference signal for the CSI resource config/set that requested/instructed switching to be transmitted, and may measure the strength of the beam transmitted through the reference signal for the indicated CSI resource config/set.

### (Operations of the base station)

0. (When model training is performed by the UE, and the model is managed by the UE) The base station may receive, from the UE, information about Set A and Set B suitable for the UE model (e.g., beam index and/or beam pattern, supported/preferred configuration of DL RS transmission, etc.). When there are one or more models configurable for a specific beam prediction operation, one or more Set A/B information may be included.

1. The base station may configure, to the UE, one or more CSI resource configuration(s)/set(s) mapped to Set B of the AI/ML model for beam prediction.

Each CSI resource set/config may be mapped to a specific model or specific beams of the specific model. The CSI resource config ID and the model ID and/or Set ID may be mapped. Here, the model/set ID used may use the information shared from the UE in step 0.

Default CSI resource set may be designated. CSI resource set mapped to model id or set id #0, or csi-resourceConfigId #0 may be set, or the base station may designate a specific CSI resource set/conf as default.

When switching the model according to characteristic information about the UE, criteria for the model switching may be set for each model as follows. This may be set by the base station through the corresponding RRC message or determined to be defined in the specifications. For example, if three different models are configured for the temporary beam prediction, the following criteria may be set.
- Model ID #0 - CSI resource set #x: when UE speed<= 30 km/h
- Model ID #1 - CSI resource set #y: when 30 km/h < UE speed <= 60 km/h
- Model ID #2 - CSI resource set #z: when UE speed > 60 km/h

In this case, it may be preferable to map one CSI report configuration to one or more configured CSI resource sets(s)/config(s) for the corresponding beam prediction.

2. The base station may receive CSI resource set/config information indicated from the UE.

The base station may receive a UCI/MAC CE/RRC message including indicated CSI resource set/config information.

The base station that receives the information may then transmit RSs belonging to the indicated CSI resource set to the UE. In this case, a response message to the corresponding MAC CE may be transmitted.

3. The base station may perform AI/ML based beam management using the reported beam information.

If the UE performs model inference, the base station may select one of the top N beams reported from the UE and transmit a beam indication to the UE.

If the base station performs model inference, the base station may use the beam information reported from the UE as an input value to the AI/ML model. The base station may select one beam based on beam information about set A derived through inference of the AI/ML model and transmit a beam indication to the UE.

4. The base station may receive a message indicating/requesting a new CSI resource set/config from the UE.

5. The base station may transmit a reference signal for the CSI resource set/config that has been requested/instructed to be switched.

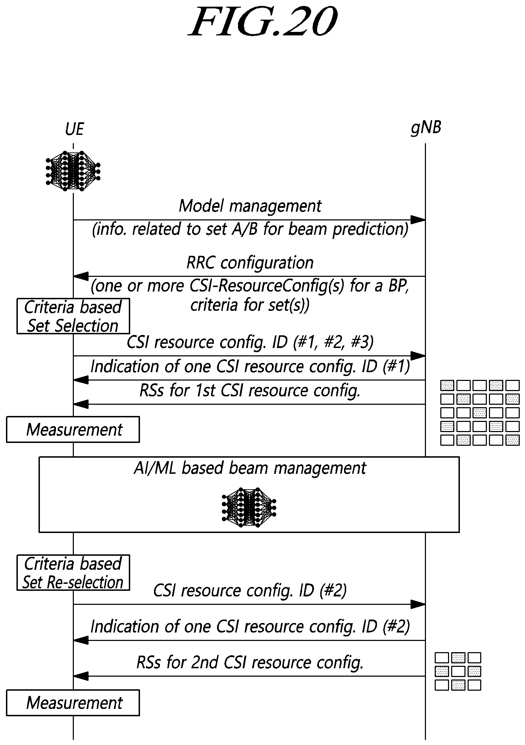

The next embodiment is an embodiment of a case where the UE selects one or more CSI resource configurations. FIG. 20 is a signal flowchart illustrating operations of a UE and a base station when the UE selects one or more reference signal resource sets according to an embodiment.

### (Operations of the UE)

1. (When model training is performed by the UE, and the model is managed by the UE) The UE may transmit, to the base station, information about Set A and Set B suitable for each model (e.g., beam index and/or beam pattern, supported/preferred configuration of DL RS transmission, etc.). When there are one or more models/functionalities configurable for a specific beam prediction operation, one or more Set A/B information may be transmitted.

This may be defined as a supported functionality/model/CSI resource config/CSI resource set.

2. The UE may receive one or more CSI resource configuration(s)/Set(s) mapped to Set B of one or more AI/ML models/functionalities for beam prediction from the base station.

This may be defined as a configured/identified functionality/model/CSI resource config/CSI resource set.

Each CSI resource set/config may be mapped to a specific model/functionality or specific beams of the specific model/functionality. In other words, the CSI resource config ID and the model/functionality id and/or Set id may be mapped.

A default CSI resource set/conFIG. may be designated. CSI resource set mapped to model/functionality id or set id #0, or csi-resourceConfigId #0 may be set, or the base station may designate a specific CSI resource set/conf as default.

When switching the model/functionality according to characteristic information about the UE, criteria for the model/functionality switching may be set for each model/functionality as follows. This may be set by the base station through the corresponding RRC message or determined to be defined in the specifications. For example, if three different models/functionalities are configured for the temporary beam prediction, the following criteria may be set.
- Model/functionality ID #0 - CSI resource set #x: when UE speed<= 30 km/h
- Model/functionality ID #1 - CSI resource set #y: when 30 km/h < UE speed <= 60 km/h
- Model/functionality ID #2 - CSI resource set #z: when UE speed > 60 km/h

In this case, it may be preferable to map one CSI report configuration to one or more configured CSI resource sets(s)/config(s) for the corresponding beam prediction.

3. The UE may select a configuration/set(s) most suitable for its current circumstance from among the configured CSI resource config(s)/set(s) and notify the base station of the same. In other words, the UE may request the base station to transmit a reference signal according to the selected configuration/set.

This may be one or more configurations/sets/model IDs/functionalities. This may be defined as an applicable functionality/model/CSI resource config/CSI resource set.

The indicated CSI resource configs/sets/model IDs/functionalities information may be transmitted in the UCI/MAC CE/RRC message.

The UE that transmitted the information may then expect that RSs belonging to the indicated CSI resource configs/sets are to be transmitted.

4. The UE may receive signaling indicating one CSI resource config/set from the base station.

This may be defined as a functionality/model/CSI resource set activation.

5. The UE may measure the strength of the beam transmitted by the indicated CSI resource config/set and perform AI/ML based beam management based on the measured beam information.

If the UE performs model inference, the UE may infer the beam strength for Set A using the measured beam information as a model input value. The UE may transmit information about the top N beams to the base station and receive a beam identification from the base station.

If the base station performs model inference, the UE may transmit the whole or part of the measured beam information to the base station. The UE may receive beam indication from the base station.

6. The UE may instruct/request to switch CSI resource config(s)/set(s).

When CSI resource config/set switching is triggered by the defined criteria, the UE may transmit a message instructing/requesting activation of the new CSI resource config/set to the base station.

This may be defined as an applicable functionality/model/CSI resource config/CSI resource set.

7. The UE may expect a reference signal for one of the CSI resource configs/sets that was requested/instructed for switching to be transmitted, and may measure the strength of the beam transmitted through the reference signal for the CSI resource config/set newly indicated from the base station.

### (Operations of the base station)

1. (When model training is performed by the UE, and the model is managed by the UE) The base station may receive, from the UE, information about Set A and Set B suitable for the UE model (e.g., beam index and/or beam pattern, supported/preferred configuration of DL RS transmission, etc.). When there are one or more models configurable for a specific beam prediction operation, one or more Set A/B information may be included.

This may be defined as a supported functionality/model/CSI resource config/CSI resource set.

2. The base station may configure, to the UE, one or more CSI resource configuration(s)/set(s) mapped to Set B of the AI/ML model for beam prediction.

This may be defined as a configured/identified functionality/model/CSI resource config/CSI resource set.

Each CSI resource set/config may be mapped to a specific model or specific beams of the specific model. The CSI resource config ID and the model ID and/or Set ID may be mapped. Here, the model/set ID used may use the information shared from the UE in step 0.

A default CSI resource set may be designated. CSI resource set mapped to model id or set id #0, or csi-resourceConfigId #0 may be set, or the base station may designate a specific CSI resource set/conf as default.

When switching the model according to characteristic information about the UE, criteria for the model switching may be set for each model as follows. This may be set by the base station through the corresponding RRC message or determined to be defined in the specifications. For example, if three different models are configured for the temporary beam prediction, the following criteria may be set.
- Model ID #0 - CSI resource set #x: when UE speed<= 30 km/h
- Model ID #1 - CSI resource set #y: when 30 km/h < UE speed <= 60 km/h
- Model ID #2 - CSI resource set #z: when UE speed > 60 km/h

In this case, it may be preferable to map one CSI report configuration to one or more configured CSI resource sets(s)/config(s) for the corresponding beam prediction.

3. The base station may receive CSI resource set/config information from the UE.

This may be one or more configurations/sets/model IDs/functionalities and defined as the applicable functionality/model/CSI resource config/CSI resource set.

The base station may receive a UCI/MAC CE/RRC message including indicated CSI resource set/config information.

4. The base station may transmit signaling indicating one CSI resource config/set to the UE.

The base station may select one of the CSI resource sets received from the UE and transmit signaling instructing to activate only the corresponding set.

This may be defined as a functionality/model/CSI resource set activation.

5. The base station may perform AI/ML based beam management using the indicated beam information.

If the UE performs model inference, the base station may select one of the top N beams reported from the UE and transmit a beam indication to the UE.

If the base station performs model inference, the base station may use the beam information reported from the UE as an input value to the AI/ML model. The base station may select one beam based on beam information about set A derived through inference of the AI/ML model and transmit a beam indication to the UE.

6. The base station may receive a message indicating/requesting a new CSI resource set/config from the UE.

This may be defined as an applicable functionality/model/CSI resource config/CSI resource set.

7. The base station may activate a reference signal for one of the CSI resource configs/sets received from the UE.

The base station may transmit signaling instructing to activate only the corresponding set/model/functionality and may activate and transmit only the reference signal (DL RSs) for the newly indicated CSI resource config/set.

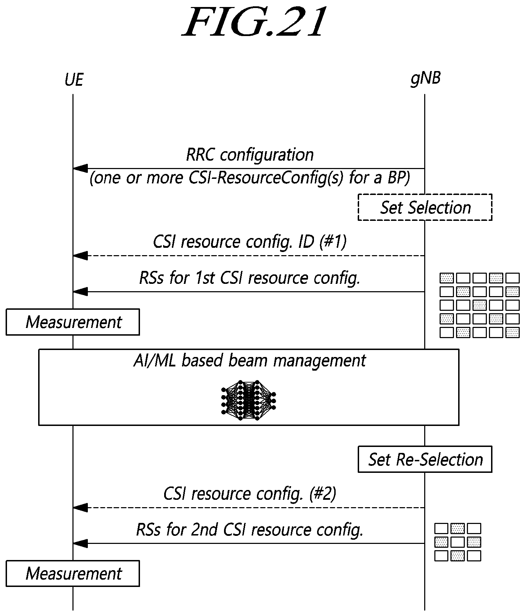

The following is an embodiment of a case where the base station selects an active CSI resource set/config. FIG. 21 is a view illustrating operations of a UE and a base station when the base station selects one reference signal resource set according to an embodiment.

### (Operations of the UE)

1. The UE may receive one or more CSI resource set(s)/CSI resource configuration(s) mapped to Set B of the AI/ML model for beam prediction from the base station.

Each CSI resource set/config may be mapped to a specific model or specific beams of the specific model. The CSI resource config ID and the model ID and/or Set ID may be mapped.

A default CSI resource set may be designated. CSI resource set mapped to model ID or set ID #0, or csi-resourceConfigId #0 may be set, or the base station may designate a specific CSI resource set/conf as default.

It may be preferable to map one/some CSI report configuration/set to one or more configured CSI resource sets(s)/config(s) for the corresponding beam prediction.

2. The UE may receive a message indicating a specific config/set among the configured CSI resource configuration(s)/set(s) from the base station.

The indicated CSI resource config/set information may be included in the DCI/MACCE/RRC message.

3. The UE may expect RSs belonging to the CSI resource config/set indicated after receiving the message to be transmitted. The UE may measure the beam strength through the corresponding RS(s).

4. The UE may perform AI/ML based beam management using the measured beam information.

If the UE performs model inference, the UE may infer the beam strength for Set A using the measured beam information as an input value and select the top N beams and report the same to the base station.

If the base station performs model inference, the UE may report all or a portion of the measured beam information to the base station.

The UE may receive beam indication from the base station.

5. The UE may receive a message instructing to switch the active CSI resource config/set.

6. The UE may expect a reference signal for the CSI resource config/set that instructed switching to be transmitted. The UE may measure the strength of the beam transmitted through the reference signal for the indicated CSI resource config/set.

### (Operations of the base station)

1. The base station may configure, to the UE, one or more CSI resource configuration(s)/set(s) mapped to Set B of the AI/ML model for beam prediction.

Each CSI resource set/config may be mapped to a specific model or specific beams of the specific model. The CSI resource config ID and the model ID and/or Set ID may be mapped. Here, the model/set ID used may use the information shared from the UE in step 0.

A default CSI resource set may be designated. CSI resource set mapped to model ID or set ID #0, or csi-resourceConfigId #0 may be set, or the base station may designate a specific CSI resource set/conf as default.

In this case, one CSI report configuration may be mapped to one or more configured CSI resource sets(s)/config(s) for the corresponding beam prediction.

2. The base station may transmit, to the UE, a message indicating a specific config/set among the configured CSI resource configuration(s)/set(s).

The indicated CSI resource config/set information may be included in the DCI/MACCE/RRC message.

The base station may first request UE assistance information for determining it.

3. After transmitting the message, the base station may transmit RSs belonging to the indicated CSI resource config/set.

4. The base station may perform AI/ML based beam management using the beam information reported from the UE.

If the UE performs model inference, the UE may infer the beam strength for Set A using the measured beam information as an input value and select the top N beams and report the same to the base station.

If the base station performs model inference, the UE may report the whole or part of the measured beam information to the base station.

The base station may transmit a beam indication to the UE.

5. The base station may transmit a message instructing to switch the active CSI resource config/set.

6. The base station may transmit a reference signal for the CSI resource config/set that has instructed the changing.

According to the embodiments described above, when a beam management method using AI/ML is performed, CSI resources mapped to the related beam information may be configured in advance, so that appropriate CSI resources may be transmitted/received dynamically according to a switch of a model/state/scenario, making it possible to more quickly measure a new beam set. Further, as the UE may be allowed to determine the need for measuring a new beam set, a model appropriate for the UE's context may be determined without transmitting information about the UE to the base station, and a beam set according thereto may be quickly indicated to the base station, so that beam measurement may be performed faster.

Further, the beam management method using AI/ML is expected to reduce the burden of measuring the entire beam as well as reduce the overhead on RS by measuring some of all the beams, or other beams than all the beams to predict the signal strength for all the beams (Set A). However, if the prediction value of the beams for the predicted Set A is not accurate, the AI/ML method may lead to frequent beam failures or continuous disconnections by selecting inaccurate beams. To address these issues, the process of continuously monitoring the accuracy of the predicted beam is importance. It is necessary to compare the actual measurement value and prediction value of beams belonging to Set A to monitor the accuracy of the beam. However, it may increase the measurement burden of the UE to measure the beam of Set A whenever all of the of the beams for Set A are inferred.

The position where inference and training are performed may also affect the model monitoring method. In other words, the inference subject performs monitoring, and the result value should be transmitted to the training subject. This is because the model monitoring result may allow model update to be performed through new training. Further, even when training and inference are performed on one node, the results of model monitoring may trigger a new procedure as needed, so that it may be necessary to transfer feedback according to model performance to the base station or the UE.

The disclosure proposes to define Set C composed of a beam set for AI/ML model monitoring as a way to determine the accuracy of the result value (output) of the inferred beams (Set A) of the AI/ML model when performing a beam management procedure between the base station (NW) and the UE using the AI/ML model. Here, Set C is composed of one or more beams used for model monitoring purposes, and the beams may be selected/defined as a subset of Set A by a node performing model monitoring.

In the disclosure, Set A may be defined for downlink (DL) beam prediction, and Set B may be defined for DL beam measurement.

More specifically, the above proposed Set C may be composed of N beams (e.g., N (top-N) beams in order from the beam with the highest RSRP) selected by any algorithm (e.g., high RSRP) among the beams of Set A derived by the AI/ML model. The information about the beam constituting Set C may be determined by the UE or the base station according to the model inference position. When the UE performs model inference, Set C may be composed of beams belonging to top-N selected for reporting to the base station among the beams of Set A derived through model inference, and may be dynamically configured between the UE and the base station whenever top-N is reported. At this time, the network (NW) may implicitly map the beams for top-N received from the UE to the RS resources allocated to the UE in advance for Set C, so that the base station and the UE mutually recognize the configuration for Set C and perform resource mapping for measurement. The UE may determine the model accuracy by comparing the result value of the output for the set C inferred by the AI/ML model and the measurement value for the actual measured set C. When NW performs model inference, the beams of Set C may be composed of beams arbitrarily selected from among the beams of Set A derived by model inference at the base station, which may depend on the base station implementation.

Here, the base station may set at least two different CSI resource sets through the RRC message, allowing the UE to measure the signal strength of each of the beams constituting Set B and Set C. In other words, a 1^{st} CSI resource set mapped to at least the beams belonging to Set B and a 2^{nd} CSI resource set for Set C may be allocated for each UE. Here, the 2^{nd} CSI resource set for Set C may be configured to be transmitted in temporal association with the 1^{st} CSI resource set for Set B. More specifically, the 2^{nd} CSI resource set may be configured to be transmitted at a time (e.g., x slots after the reporting) associated with reporting for the 1^{st} CSI resource set.

Further, the signal strength of the beams measured through the 2^{nd} CSI resource set may be used to evaluate model performance based on comparison with inferred prediction values.

Hereinafter, an operation of the UE for performing model inference according to an embodiment is described. In addition to the CSI resource set for Set B for measuring the beam (set B) to be used as the input of the AI/ML model, the UE may additionally receive the RS resource information (CSI resource set for model monitoring/Set C) for the beam (Set C) to be used to evaluate the performance of the AI/ML model. In this case, after the beam measurement (Set B) for model inference, the UE may perform an additional beam measurement (Set C) for determining the accuracy of the corresponding inference in connection with the reporting time for Set B. The UE may determine the model accuracy by comparing the prediction value and the measurement value for Set C. For example, the report on the measurement result of the beam for Set C may transmit, to the base station, the performance evaluation result of the model (e.g., accuracy, model update, or reselection) or fallback indication (e.g., fallback to a beam management procedure that does not use the AI/ML model).

According to embodiments of the disclosure, the detailed procedure may be broadly categorized based on whether the model inference position is performed at an network (gNB) or UE.

When the UE performs model inference, operations of the UE and the base station are as follows.

### (Operations of the UE)

1. The UE may receive an RRC configuration message including information about at least two CSI resource sets(s) from the base station.

The RRC configuration message may include configuration information about the first CSI resource set, the reporting method thereof, and the second CSI resource set and the reporting method thereof.

Here, the configuration information for the first CSI resource set may be configured in the same manner as in the related art.

According to the disclosure, a configuration method and a reporting method of the second CSI resource set associated with the first CSI resource set may be newly defined.

The temporal resource information about the second CSI resource set may be configured in association with the reporting time for the first CSI resource set.

Based on the number of RS resources (beams) in the second CSI resource set, the UE (e.g., after measuring the first CSI resource set) may infer the prediction value for Set A using the AI/ML model and identify N RS resources to be reported to the base station. For example, the temporal resource information of the second CSI resource set may include a value (e.g., x slots) relative to either the transmission time of the first CSI resource set or the CSI reporting time for Top-N inferred based on the first CSI resource set measurements. Here, N may mean Top-N corresponding to N measurement values in the order from the highest measurement value.

Unlike the typical reporting of beam measurement results, the reporting method for the second CSI resource set may include settings for request information corresponding to the model monitoring result value. For example, information related to model accuracy, model deactivation/change, or fallback identification may be reported.

2. The UE may measure the signal strength of the RS(s) transmitted in the first CSI resource set (Set B).

3. The UE may infer the prediction value for the entire beam Set A using the measured beam information Set B as an input value of the AI/ML model.

4. The UE may transmit a CSI report including information about the beam Set C belonging to Top-N among the prediction values derived by inference to the base station according to the setting of 1.

5. If necessary, the UE may receive information about a new serving beam from the base station. (Beam indication)

6. The UE measures the signal strength of the RS(s) for the 2^{nd} CSI resource set according to setting 1. The UE expects the corresponding RS to be sequentially/implicitly mapped and transmitted for the Top-N beams reported by the UE.

Here, 'sequential/implicit' may mean mapping to the RIs corresponding to the RSs belonging to the 2^{nd} CSI resources set in a pre-agreed order, such as ascending order/descending order for beam id or resource indicator (RI) for Top-N, or ascending order/descending order for the reported prediction value (e.g., RSRP).

7. The UE may determine the accuracy of the model by comparing the measured signal strength of the beam mapped to the 2^{nd} CSI resource set with the value of Top-N, the prediction value derived by inference.

8. The UE may transmit the model performance evaluation result to the base station according to setting 1.

This report may be transmitted or omitted depending on the model monitoring result. Alternatively, the result may be reported every time, regardless of the monitoring outcome.

If the performance evaluation indicates low model accuracy, the UE may request/direct the base station to deactivate, replace, or fall back the AI/ML model, and request a new CSI resource.

### (Operations of the base station)

1. The base station may transmit an RRC configuration message including information about at least two CSI resource sets(s) to the UE.

The RRC configuration message may include configuration information about the first CSI resource set, the reporting method thereof, and the second CSI resource set and the reporting method thereof.

Here, the configuration information for the first CSI resource set may be identical to that in the related art.

According to the disclosure, new methods for configuring and reporting the second CSI resource set associated with the first CSI resource set may be newly defined.

The temporal resource information of the second CSI resource set may be configured relative to the reporting time of the first CSI resource set.

The second CSI resource set may be configured to include N RS resources corresponding to the number of beams reported to the base station by the UE. For example, the temporal resource information may indicate a value (e.g., x slots)relative to either the transmission time of the first CSI resource set or the CSI reporting time for Top-N inferred from the measurements of the beams mapped to the first CSI resource set.

Unlike the typical reporting of beam measurement results, the reporting method for the second CSI resource set may include request information based on the model monitoring result. For example, the report may include information on model accuracy, model deactivation, replace, or fall back identification.

2. The base station may transmit the RSs to which the beams for Set B are mapped according to setting 1 using the first CSI resource set.

3. The base station may receive a CSI report including information about the N beams (Set C) from the UE.

4. If necessary, the base station may select one beam and inform the UE of information about the selected beam. (beam indication)

5. The base station may sequentially/implicitly map the beams included in the CSI report received at 3 to the RS(s) for the 2^{nd} CSI resource set pre-allocated at 1 and transmit the same.

Here, 'sequential/implicit' means mapping to the RIs corresponding to the RSs belonging to the 2^{nd} CSI resources set in a pre-agreed order, such as ascending order/descending order for beam id or resource indicator (RI) for Top-N reported from the UE, or ascending order/descending order for the reported prediction value (e.g., RSRP).

6. The base station may receive model performance evaluation results from the UE.

This result from the UE may be received or omitted depending on the model monitoring result. Alternatively, the result may be reported every time, regardless of the monitoring outcome.

If performance evaluation indicates low model accuracy, the UE may request/direct the base station to deactivate, replace, or fall back the AI/ML model, so that the corresponding information may serve as a request for a new CSI resource configuration.

When the base station/NW performs model inference, operations of the base station and the UE are as follows.

### (Operations of the base station)

1. The base station may transmit an RRC configuration message including information about at least two CSI resource set to the UE.

The RRC configuration message may include configuration information about the first CSI resource set, the reporting method thereof, and the second CSI resource set and the reporting method thereof.

Here, the configuration information for the first CSI resource set may be identical to that in the ;related art.

According to the disclosure, new methods for configuring and reporting the second CSI resource set in association with the first CSI resource set may be defined.

The temporal resource information for the second CSI resource set may be configured relative to the reporting time of the first CSI resource set. For example, the temporal resource information may indicate a value (e.g., x slots) relative to the transmission time of the first CSI resource set or the CSI reporting time for the result values for the measurement of the beams mapped to the first CSI resource set.

The reporting time information for the second CSI resource set may be configured relative to the reporting time of the first CSI resource set. For example, the temporal resource information may indicate a value (e.g., y slots) relative to the transmission time of the first CSI resource set or the CSI reporting time for the measurement results of beams mapped to the first CSI resource set.

2. The base station may transmit the RSs to which the beams for Set B are mapped according to setting 1 using the first CSI resource set.

3. The base station may receive a CSI report including measurement values for beam Set B mapped to the first CSI resource set from the UE.

4. The base station may infer the prediction value for the entire beam Set A using the beam information included in the CSI report received at 3 as an input value of the AI/ML model.

5. If necessary, the base station may select one best beam among the prediction values for the inferred beam (Set A) and inform the UE of information about the selected beam.

6. The base station may arbitrarily select N beams (Set C) not belonging to Set B out of Set A, map the same to the RS of the 2^{nd} CSI resource set and transmit it to the UE according to the settings.

7. The base station may receive the measurement result for Set C from the UE at the time according to setting 1.

8. The base station may compare the measurement result received at 7 with the prediction result value inferred at 5 and perform model monitoring.

9. The base station may indicate a new setting to the UE according to the model performance evaluation result.

This may be transmitted or omitted depending on the model monitoring result.

If the performance evaluation indicates low model accuracy, the base station may indicate a new CSI resource configuration to the UE in response to deactivation, replacement, or fallback of the AI/ML model.

### (Operations of the UE)

1. The UE may receive an RRC configuration message including information about at least two CSI resource sets from the base station.

It may include configuration information about the first CSI resource set, the reporting method thereof, and the second CSI resource set and the reporting method thereof.

Here, the configuration information for the first CSI resource set may be identical to that in the prior art.

According to the disclosure, new methods for configuring and reporting the second CSI resource set in relation to the first CSI resource set may be defined.

The temporal resource information for the second CSI resource set may also be configured relative to the reporting time of the first CSI resource set. For example, the temporal resource information may indicate a value (e.g., x slots) relative to the transmission time of the first CSI resource set or the CSI reporting time for the result values for the measurement of the beams mapped to the first CSI resource set.

The reporting time information for the second CSI resource set may be configured relative to the reporting time of the first CSI resource set. For example, the temporal resource information indicate that a value (e.g., y slots) relative to the transmission time of the first CSI resource set or the CSI reporting time for the measurement results of the beams mapped to the first CSI resource set.

2. The UE may measure the signal strength of the RSs to which the beams for Set B are mapped according to setting 1 using the first CSI resource set.

3. The UE may transmit/report, to the base station, a CSI report including measurement values for beam Set B mapped to the first CSI resource set.

4. If necessary, the UE may receive information about the selected beam from the base station. (beam indication)

5. The UE may measure the signal strength for the RS of the 2^{nd} CSI resource set (Set C) transmitted in association with the transmission time of 3 according to setting 1.

6. The UE may report/transmit the measurement result of 5 to the base station at the time according to setting 1.

7. According to the model performance evaluation result, the UE may receive a new setting from the base station.

This may be transmitted or omitted depending on the model monitoring result of the base station.

If performance evaluation result indicates low model accuracy, the base station may instruct the UE with a new CSI resource configuration following the AI/ML model deactivation, replacement, or fallback.

As described above, when AI/ML based beam management is performed, low model accuracy may lead to degraded communication quality due to frequent beam switching and disconnections. To prevent frequent disconnections caused by incorrect beam predictions, continuous model monitoring during AI/ML model inference is required. However, the typical model monitoring compares predicted beam results derived from measurement of all candidate beams, which imposes significant measurement overhead during each inference. According to the disclosure, a new beam set, Set C, is implicitly defined to minimize configuration signaling for model monitoring, enabling the UE to assess model accuracy using a minimum number of beam measurements per inference. This approach may reduce the burden of additional beam measurement and helps minimize disconnections from the cell through continuous model monitoring.

Hereinafter, hardware and software configurations of a UE and a base station which may perform all or some of the embodiments described above in connection with FIGS. 1 to 21 are described with reference to the drawings. The above description may be omitted for brevity, in such cases, the omitted content may be applied similarly to the following description, provided it does not conflict with the technical spirit of the invention.

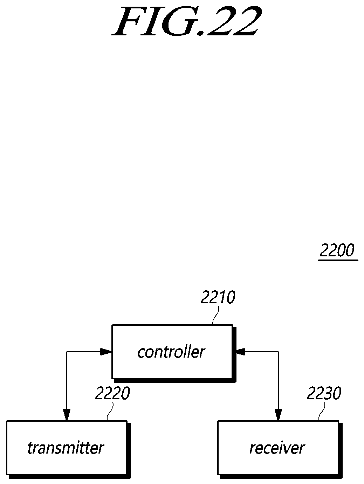

FIG. 22 is a block diagram illustrating a UE 2200 according to an embodiment.

Referring to FIG. 22, a UE 2200 according to an embodiment includes a transmitter 2220, a receiver 2230, and a controller 2210 controlling the transmitter and the receiver.

The controller 2210 controls the overall operation of the UE 2200 according to the model management method in beam management using artificial intelligence and machine learning required to perform the above-described embodiments.

The transmitter 2220 and the receiver 2230 are used to transmit or receive signals or messages or data necessary for performing the above-described embodiments, with the base station.

The controller 2210 may receive configuration information about one or more reference signal (RS) resource sets configured to correspond to one or more AI/ML models or functionalities, respectively, used for a predetermined purpose.

According to an embodiment, the predetermined purpose of using the AI/ML model or AI/ML functionality may be a sub use case to which the AI/ML model may be applied in various use cases in wireless communication. For example, the predetermined purpose of using the AI/ML model or AI/ML functionality may be a beam prediction procedure used in CSI-RS transmission.

According to an embodiment, one or more AI/ML functionalities may be configured for each sub use case, and one or more AI/ML models may be configured for each AI/ML functionality. In this case, the one or more AI/ML models may be configured to have different input/output value ranges (dimensions) according to various pieces context/state information about the UE as well as the capability/configuration/scenario of the UE.

According to an embodiment, the one or more reference signal resource sets may be each configured based on information about a reference signal preferred as an input to the one or more AI/ML models or functionalities configured for the UE. In other words, in relation to beam prediction used for CSI-RS transmission, among all reference signals configurable for the UE according to the UE's capability, a set of reference signals preferred or supported as an input to each of the AI/ML model or functionality may be configured as a reference signal resource set. In this case, a measurement value for the reference signal may be input to an AI/ML model or functionality corresponding to the one reference signal resource set to infer all reference signals. In other words, if the measurement value for the reference signal is input to the AI/ML model or functionality, all reference signals may be inferred through the AI/ML model or functionality.

The controller 2210 may receive configuration information about one or more reference signal resource sets configured to correspond to one or more AI/ML models or functionalities, respectively, through higher layer signaling such as RRC signaling. In this case, configuration information about all reference signals corresponding to the configuration information about the one or more reference signal resource sets may also be received.

The controller 2210 may receive indication information about one reference signal resource set selected from among the one or more reference signal resource sets and measure a signal strength or signal quality for the reference signal based on the one reference signal resource set.

According to an embodiment, one reference signal resource set may be selected by the base station. In this case, the base station may select one reference signal resource set from among one or more reference signal resource sets. The base station may request assistance information from the UE and determine whether to switch the AI/ML model or functionality based on the assistance information received from the UE. According to an embodiment, the one reference signal resource set may be selected based on capability information about the UE including an AI/ML model or functionality supported by the UE, state information about the UE, or predetermined criteria information.

In this case, indication information about the one reference signal resource set may be received using at least one of followings: downlink control information, a medium access control (MAC) control element (CE), and higher layer signaling.

According to another embodiment, one reference signal resource set may be selected by the UE. In this case, the one reference signal resource set may be selected based on capability information about the UE including an AI/ML model or functionality supported by the UE, state information about the UE, or predetermined criteria information. The controller 2210 may receive criteria information for determining one reference signal resource set from the base station. The criteria information may be configured as reference values for at least one of the UE's moving speed, direction, position, data type (DRB), RSRP, battery information, UE antenna configuration information, and model accuracy.

In this case, the controller 2210 may transmit indication information about one reference signal resource set to the base station using at least one of UCI, MAC CE, or higher layer signaling.

The controller 2210 may receive a reference signal through selected one reference signal resource set. In other words, the controller 2210 may expect that reference signals belonging to the reference signal resource set indicated by the indication information are to be transmitted, and measure the signal strength or signal quality of the corresponding reference signals.

Thereafter, the controller 2210 may perform AI/ML-based beam management using the measured beam information. When the UE performs AI/ML model inference, the controller 2210 may infer the beam strength for all reference signals using the measured beam information as an input value. The controller 2210 may select the top N beams from among the inferred values and report them to the base station. When the base station performs AI/ML model inference, the controller 2210 may report all or a portion of the measured beam information to the base station.

The controller 2210 may receive a beam indication selected from the base station. If the controller 2210 receives change indication information about the reference signal resource set, the controller 2210 may measure the strength of the beam transmitted through the reference signal for the indicated reference signal resource set.

According to the embodiments described above, models may be managed in beam management using artificial intelligence and machine learning. Further, it is possible to measure a new beam set faster and more efficiently by preconfiguring a reference signal resource mapped to related beam information in AI/ML model management and dynamically transmitting/receiving an appropriate reference signal resource according to the switching of a model/state/scenario.

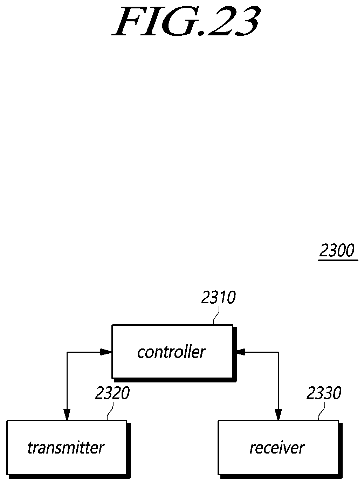

FIG. 23 is a block diagram illustrating a base station 2300 according to an embodiment.

Referring to FIG. 23, a base station 2300 according to another embodiment includes a transmitter 2320, a receiver 2330, and a controller 2310 controlling the transmitter and the receiver.

The controller 2310 controls the overall operation of the base station 2300 and the overall operation of the repeater according to the model management method in beam management using artificial intelligence and machine learning required to perform the above-described embodiments.

The transmitter 2320 and the receiver 2330 are used to transmit or receive signals or messages or data necessary for performing the above-described embodiments, with the UE.

The controller 2310 may transmit, to the UE, configuration information about one or more reference signal (RS) resource sets configured to correspond to one or more AI/ML models or functionalities, respectively, used for a predetermined purpose.

According to an embodiment, the predetermined purpose of using the AI/ML model or AI/ML functionality may be a sub use case to which the AI/ML model may be applied in various use cases in wireless communication. For example, the predetermined purpose of using the AI/ML model or AI/ML functionality may be a beam prediction procedure used in CSI-RS transmission.

According to an embodiment, one or more AI/ML functionalities may be configured for each sub use case, and one or more AI/ML models may be configured for each AI/ML functionality. In this case, the one or more AI/ML models may be configured to have different input/output value ranges (dimensions) according to various pieces context/state information about the UE as well as the capability/configuration/scenario of the UE.

According to an embodiment, the one or more reference signal resource sets may be each configured based on information about a reference signal preferred as an input to the one or more AI/ML models or functionalities configured for the UE. In other words, in relation to beam prediction used for CSI-RS transmission, among all reference signals configurable for the UE according to the UE's capability, a set of reference signals preferred or supported as an input to each of the AI/ML model or functionality may be configured as a reference signal resource set. In this case, a measurement value for the reference signal may be input to an AI/ML model or functionality corresponding to the one reference signal resource set to infer all reference signals. In other words, if the measurement value for the reference signal is input to the AI/ML model or functionality, all reference signals may be inferred through the AI/ML model or functionality.

The controller 2310 may transmit configuration information about one or more reference signal resource sets configured to correspond to one or more AI/ML models or functionalities, respectively, through higher layer signaling such as RRC signaling. In this case, configuration information about all reference signals corresponding to the configuration information about the one or more reference signal resource sets may also be transmitted.

The controller 2310 may transmit, to the UE, indication information about one reference signal resource set selected from among the one or more reference signal resource sets and transmit the reference signal to the UE based on one reference signal resource set.

According to an embodiment, one reference signal resource set may be selected by the base station. In this case, the controller 2310 may select one reference signal resource set from among one or more reference signal resource sets. The controller 2310 may request assistance information from the UE and determine whether to switch the AI/ML model or functionality based on the assistance information received from the UE. According to an embodiment, the one reference signal resource set may be selected based on capability information about the UE including an AI/ML model or functionality supported by the UE, state information about the UE, or predetermined criteria information.

In this case, indication information about the one reference signal resource set may be transmitted using at least one of downlink control information, a medium access control (MAC) control element (CE), or higher layer signaling.

According to another embodiment, one reference signal resource set may be selected by the UE. In this case, the one reference signal resource set may be selected based on capability information about the UE including an AI/ML model or functionality supported by the UE, state information about the UE, or predetermined criteria information. The controller 2310 may transmit, to the UE, criteria information for determining one reference signal resource set from the base station. The criteria information may be configured as reference values for at least one of the UE's moving speed, direction, position, data type (DRB), RSRP, battery information, UE antenna configuration information, and model accuracy.

In this case, the controller 2310 may receive indication information about one reference signal resource set from the UE using at least one of UCI, MAC CE, or higher layer signaling.

The controller 2310 may transmit a reference signal through selected one reference signal resource set. In this case, the UE may expect that reference signals belonging to the reference signal resource set indicated by the indication information will be transmitted, and measure the signal strength or signal quality of the corresponding reference signals.

Thereafter, the UE may perform AI/ML-based beam management using the measured beam information. When the UE performs AI/ML model inference, the UE may infer the beam strength for all reference signals using the measured beam information as an input value. The controller 2310 may receive a report for the top N beams selected from among the inferred values from the UE. When the base station performs AI/ML model inference, the controller 2310 may receive a report for all or a portion of the measured beam information from the UE.

The controller 2310 may transmit the selected beam indication to the UE. If receiving change indication information about the reference signal resource set, the UE may measure the strength of the beam transmitted through the reference signal for the indicated reference signal resource set.

According to the embodiments described above, models may be managed in beam management using artificial intelligence and machine learning. Further, it is possible to measure a new beam set faster and more efficiently by preconfiguring a reference signal resource mapped to related beam information in AI/ML model management and dynamically transmitting/receiving an appropriate reference signal resource according to the switching of a model/state/scenario.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

### CROSS-REFERENCE TO RELATED APPLICATION

This application claims priority to Korean Patent Application Nos. 10-2022-0139081, filed on October 26, 2022, and 10-2023-0144192, filed on October 25, 2023 in the Korean Intellectual Property Office, the disclosures of which are incorporated by reference herein in their entireties.

## Claims

1. A method for a user equipment (UE) to perform model management in beam management using artificial intelligence and machine learning (AI/ML), the method comprising:
receiving configuration information about one or more reference signal (RS) resource sets configured to correspond to one or more AI/ML models or functionalities, respectively, used for a predetermined purpose;
receiving indication information about selected one reference signal resource set, which selected from among the one or more reference signal resource sets; and
measuring a signal strength or signal quality for a reference signal based on the selected one reference signal resource set.

2. The method of claim 1, wherein the one or more reference signal resource sets are each configured based on information about a reference signal preferred as an input to the one or more AI/ML models or functionalities configured for the UE.

3. The method of claim 1, wherein a measurement value for the reference signal is input to an AI/ML model or functionality corresponding to the selected one reference signal resource set to infer all reference signals.

4. The method of claim 1, wherein the selected one reference signal resource set is selected based on capability information about the UE including an AI/ML model or functionality supported by the UE, state information about the UE, or predetermined criteria information.

5. The method of claim 1, wherein indication information about the selected one reference signal resource set is received using at least one of downlink control information, a medium access control (MAC) control element (CE), or higher layer signaling.

6. A method for a base station to perform model management in beam management using artificial intelligence and machine learning (AI/ML), the method comprising:
transmitting, to a user equipment (UE), configuration information about one or more reference signal (RS) resource sets configured to correspond to one or more AI/ML models or functionalities, respectively, used for a predetermined purpose;
transmitting, to the UE, indication information about selected one reference signal resource set, which is selected from among the one or more reference signal resource sets; and
transmitting a reference signal to the UE based on the selected one reference signal resource set.

7. The method of claim 6, wherein the one or more reference signal resource sets are each configured based on information about a reference signal preferred as an input to the one or more AI/ML models or functionalities configured for the UE.

8. The method of claim 6, wherein a measurement value for the reference signal is input to an AI/ML model or functionality corresponding to the one reference signal resource set to infer all reference signals.

9. The method of claim 6, wherein the selected one reference signal resource set is selected based on capability information about the UE including an AI/ML model or functionality supported by the UE, state information about the UE, or predetermined criteria information.

10. The method of claim 6, wherein indication information about the selected one reference signal resource set is transmitted using at least one of downlink control information, a medium access control (MAC) control element (CE), or higher layer signaling.

11. A user equipment (UE) performing model management in beam management using artificial intelligence and machine learning (AI/ML), comprising:
a transmitter;
a receiver; and
a controller configured to control an operation of the transmitter and the receiver, wherein the controller:
receives configuration information about one or more reference signal (RS) resource sets configured to correspond to one or more AI/ML models or functionalities, respectively, used for a predetermined purpose;
receives indication information about selected one reference signal resource set, which is selected from among the one or more reference signal resource sets; and
measures a signal strength or signal quality for a reference signal based on the selected one reference signal resource set.

12. The UE of claim 11, wherein the one or more reference signal resource sets are each configured based on information about a reference signal preferred as an input to the one or more AI/ML models or functionalities configured for the UE.

13. The UE of claim 11, wherein a measurement value for the reference signal is input to an AI/ML model or functionality corresponding to the selected one reference signal resource set to infer all reference signals.

14. The UE of claim 11, wherein the selected one reference signal resource set is selected based on capability information about the UE including an AI/ML model or functionality supported by the UE, state information about the UE, or predetermined criteria information.

15. The UE of claim 11, wherein indication information about the selected one reference signal resource set is received using at least one of downlink control information, a medium access control (MAC) control element (CE), or higher layer signaling.
